# EUROPÄISCHE PATENTSCHRIFT

(11) **EP 3 458 248 B1**
(45) Veröffentlichungstag und Bekanntmachung des Hinweises auf die Patenterteilung: **09.08.2023**
(21) Anmeldenummer: 17720833.7
(22) Anmeldetag: 05.05.2017
(51) Int. Cl.: B29C 65/10, B29C 65/14, B29C 65/72, B29K 101/12, B29K 59/00, B29K 67/00, B29K 77/00, B29K 81/00

(54) **VERFAHREN ZUM VERSCHWEISSEN VON FORMKÖRPERN**
METHOD FOR WELDING MOULDED ARTICLES
PROCÉDÉ DE SOUDAGE D'ARTICLES MOULÉS

(30) Priorität: 17.05.2016 EP 16170000
(43) Veröffentlichungstag der Anmeldung: 27.03.2019
(73) Patentinhaber: BASF SE, 67056 Ludwigshafen (DE)
(72) Erfinder: MOCHEV, Stefan, 67056 Ludwigshafen (DE); ENDEMANN, Ulrich, 67056 Ludwigshafen (DE)
(74) Vertreter: BASF IP Association
(86) Internationale Anmeldenummer: PCT/EP2017/060825
(87) Internationale Veröffentlichungsnummer: WO 2017/198483

(56) Entgegenhaltungen:
- EP-A1- 1 415 789
- DE-A1- 10 019 300
- DE-A1-102007 026 163
- US-A- 4 094 725
- US-A- 4 450 038
- US-A1- 2011 024 038

## Beschreibung

Die vorliegende Erfindung betrifft ein Verfahren zum Verschweißen eines ersten Formkörpers (1a) mit einem zweiten Formkörper (1b). Dazu wird ein Werkzeug (5) verwendet, das eine erste Außenfläche (6a) und eine zweite Außenfläche (6b) aufweist, wobei die erste Außenfläche (6a) einen Kanal (7a) umfasst und die zweite Außenfläche (6b) einen Kanal (7b) umfasst. Das Ende (2a) des ersten Formkörpers (1a) wird durch ein heißes Gas erwärmt, während sich das Ende (2a) in einem Abstand (Xa) zur Kanaleintrittsebene (14a) im Bereich von 3 mm außerhalb des Kanals (7a) bis 10 mm innerhalb des Kanals (7a) befindet. Ebenso wird die Fügefläche (2b) des zweiten Formkörpers (1b) durch ein heißes Gas erwärmt, während sich die Fügefläche (2b) in einem Abstand (Xb) zur Kanaleintrittsebene (14b) in einem Bereich von 3 mm außerhalb des Kanals (7b) bis 10 mm innerhalb des Kanals (7b) befindet. Anschließend werden das erwärmte Ende (2a) und die erwärmte Fügefläche (2b) miteinander in Kontakt gebracht, abgekühlt und eine Schweißnaht zwischen dem ersten Formkörper (1a) und dem zweiten Formkörper (1b) ausgebildet.

Zur Herstellung von komplexen Formkörpern, wie beispielsweise von hohlen Formkörpern ist es notwendig, zwei oder mehrere Formkörper miteinander zu verschweißen. Hierzu sind im Stand der Technik verschiedene Verfahren beschrieben.

Die DE 692 13 849 beschreibt ein Verfahren zum Verschweißen von thermoplastischen Materialien durch Anblasen mit einem warmen Gas. Dabei werden zwei Platten eines thermoplastischen Materials miteinander verschweißt, indem in den Bereich zwischen die beiden Platten ein heißes Inertgas, das Helium sowie Stickstoff und/oder Argon enthält, geblasen wird. Dadurch erwärmt sich die Fläche zwischen den beiden Platten und eine Schweißnaht wird ausgebildet.

Nachteilig bei dem in der DE 692 13 849 beschriebenen Verfahren ist, dass die Temperatur des heißen Gases und damit auch die Temperatur, auf die die beiden Platten erwärmt werden, nur schwer zu regeln ist, was teilweise zu einer Überhitzung und dadurch zu einem Abbau des thermoplastischen Materials führen kann. Zudem kann das heiße Gas nur schlecht örtlich begrenzt zwischen die Platten geleitet werden.

Die DE 100 19 300 beschreibt ein Werkzeug, das zwischen zwei zu verbindende Kunststoffteile eingeführt wird. Dieses Werkzeug kann die zu verschweißenden Flächen der zu verbindenden Kunststoffteile berührungsfrei durch Strahlungswärme und einen heißen Inertgasstrom erhitzen

Ein ähnliches Verfahren wie die DE 100 19 300 beschreibt die EP 1 415 789. Dabei wird ebenfalls ein Werkzeug eingesetzt, das einerseits durch Strahlungswärme, andererseits durch ein heißes Gas Wärme auf die zu verschweißende Flächen der Formkörper überträgt. Das in der EP 1 415 789 beschriebene Werkzeug ist dem in der DE 100 19 300 beschriebenen Werkzeug ähnlich.

Nachteilig bei den in der DE 100 19 300 und der EP 1 415 789 beschriebenen Verfahren ist, dass die Verbindungsbohrungen Düsenöffnungen sind und diese den Schweißnahtbereich nur punktuell erwärmen. Daher ist keine gleichmäßige Erwärmung des Schweißnahtbereichs möglich. Stattdessen kann es zu lokaler Überhitzung und lokalem Abbau des in den Kunststoffteilen enthaltenen Polymers kommen, gleichzeitig gibt es Schweißnahtbereiche, an denen das Kunststoffteil bzw. das in diesem enthaltene Polymer nicht ausreichend aufschmilzt, so dass die an diesen Stellen ausgebildete Schweißnaht geschwächt ist. Weisen die zu verschweißenden Formkörper außerdem einen Verzug auf, so wird die ungleichmäßige Erwärmung zusätzlich verstärkt. Durch die resultierenden Temperaturschwankungen entlang des Schweißnahtbereichs ergeben sich unterschiedlich starke Aufschmelzungen des Polymers, was zu schwankenden Qualitäten entlang der Schweißnaht führt.

Die DE 10 2007 026 163 beschreibt ein Werkzeug und ein Verfahren zum Verschweißen von thermoplastischen Kunststoffteilen. Dabei wird der Kunststoff mit Hilfe des Werkzeugs durch Wärmestrahlung und zugleich durch Beaufschlagung mit einem heißen Gas durch Konvektion erhitzt. Als Heißgas wird ein Gas-Luftgemisch eingesetzt. Die Kunststoffteile werden so positioniert, dass sich die Fügeflächen über den Öffnungen, aus denen die Luft herausströmt, befinden.

Die US 2011/0024038 beschreibt ebenfalls ein Werkzeug sowie ein Verfahren zum Verschweißen von zwei Kunststoffteilen. Auch in diesem Verfahren werden zunächst die beiden Kunststoffteile über Düsen positioniert, anschließend wird heiße Luft aus den Düsen auf die Stellen geblasen, die miteinander verbunden werden sollen. Die Fügeflächen werden dann unter Druck miteinander in Kontakt gebracht und so die Kunststoffteile miteinander verschweißt.

Die US 4,094,725 beschreibt ebenfalls ein Verfahren zum Verschweißen von thermoplastischen Kunststoffteilen mit einem heißen Gas. Dabei werden die Kunststoffteile jeweils über Düsen positioniert, mit dem Gas erhitzt und schließlich miteinander verpresst.

Die US 4,450,038 betrifft ein Werkzeug sowie ein Verfahren zum Verschweißen von thermoplastischen Kunststoffteilen, wobei die beiden Materialien der thermoplastischen Kunststoffteile unterschiedliche Erweichungstemperaturen aufweisen. Das Verschweißen erfolgt mittels heißer Luft, die durch eine Düse geblasen wird.

Die in der DE 10 2007 026 163, in der US 2011/0024038, in der US 4,094,725 und in der US 4,450,038 beschriebenen Verfahren und Werkzeuge, sind denen der DE 10019300 und der EP 1 415 789 ähnlich. Nachteilig ist daher, dass die Öffnungen zum Erwärmen des Schweißnahtbereichs Düsenöffnungen sind und diese den Schweißnahtbereich nur punktuell erwärmen. Es kann daher zu lokalen Überhitzungen und lokalem Abbau des in den Kunststoffteilen enthaltenen Polymers kommen, da eine gleichmäßige Erwärmung des Schweißnahtbereichs durch Düsenöffnungen nicht möglich ist. Gleichzeitig gibt es Schweißnahtbereiche, an denen das Kunststoffteil nicht ausreichend aufschmilzt, so dass die an diesen Stellen ausgebildete Schweißnaht geschwächt ist. Auch bei diesen Verfahren wird die ungleichmäßige Erwärmung durch einen möglichen Verzug der Formkörper zusätzlich verstärkt. Diese führt zusätzlich zu schwankenden Qualitäten entlang der Schweißnaht.

Die der vorliegenden Erfindung zugrundeliegende Aufgabe besteht somit darin, ein Verfahren zum Verschweißen eines ersten Formkörpers mit einem zweiten Formkörper bereitzustellen, das die vorstehend beschriebenen Nachteile der Verfahren aus dem Stand der Technik nicht oder nur in vermindertem Maße aufweist. Zudem soll das Verfahren möglichst einfach und kostengünstig durchführbar sein.

Gelöst wird diese Aufgabe durch ein Verfahren zum Verschweißen eines ersten Formkörpers (1a) mit einem zweiten Formkörper (1b),
wobei der erste Formkörper (1a) eine erste Seitenfläche (3a), eine zweite Seitenfläche (4a) und ein Ende (2a), das ein erstes thermoplastisches Polymer enthält, umfasst, und
wobei der zweite Formkörper (1b) eine Fügefläche (2b), die ein zweites thermoplastisches Polymer enthält, umfasst,
umfassend die Schritte
   a) Bereitstellen des ersten Formkörpers (1a),
   b) Bereitstellen des zweiten Formkörpers (1b),
   c) Bereitstellen eines Werkzeugs (5), das eine erste Außenfläche (6a) und eine zweite Außenfläche (6b) aufweist,
      wobei die erste Außenfläche (6a) einen Kanal (7a) umfasst, und wobei der Kanal (7a) einen Boden (10a), eine erste Kanalwand (8a) mit einem ersten höchsten Punkt (12a) und eine zweite Kanalwand (9a) mit einem zweiten höchsten Punkt (13a) aufweist, wobei der Boden (10a) Mittel (11a) zum Zuführen von Gas in den Kanal (7a) umfasst, wobei parallel zu der ersten Außenfläche (6a) eine Kanaleintrittsebene (14a) durch den ersten höchsten Punkt (12a) verläuft und wobei zwischen der Projektionslinie (15a) des ersten höchsten Punkts (12a) längs einer senkrecht zur Kanaleintrittsebene (14a) verlaufenden Richtung und der Projektionslinie (16a) des zweiten höchsten Punkts (13a) längs einer senkrecht zur Kanaleintrittsebene (14a) verlaufenden Richtung sich der äußere Kanalbereich (17a) befindet,
      wobei die zweite Außenfläche (6b) einen Kanal (7b) umfasst, und wobei der Kanal (7b) einen Boden (10b), eine erste Kanalwand (8b) mit einem ersten höchsten Punkt (12b) und eine zweite Kanalwand (9b) mit einem zweiten höchsten Punkt (13b) aufweist, wobei der Boden (10b) Mittel (11b) zum Zuführen von Gas in den Kanal (7b) umfasst, wobei parallel zu der zweiten Außenfläche (6b) eine Kanaleintrittsebene (14b) durch den ersten höchsten Punkt (12b) verläuft und wobei zwischen der Projektionslinie (15b) des ersten höchsten Punkts (12b) längs einer senkrecht zur Kanaleintrittsebene (14b) verlaufenden Richtung und der Projektionslinie (16b) des zweiten höchsten Punkts (13b) längs einer senkrecht zur Kanaleintrittsebene (14b) verlaufenden Richtung sich der äußere Kanalbereich (17b) befindet,
   d) Positionieren des ersten Formkörpers (1a), wobei
      das Ende (2a) in einer senkrecht zur Kanaleintrittsebene (14a) verlaufenden Richtung einen Abstand (Xa) zur Kanaleintrittsebene (14a) aufweist, der im Bereich von 3 mm außerhalb des Kanals (7a) bis 10 mm innerhalb des Kanals (7a) liegt, wobei
      wenn der Abstand (Xa) im Bereich von > 0 mm bis 3 mm außerhalb des Kanals (7a) liegt, das Ende (2a) sich zumindest teilweise im äußeren Kanalbereich (17a) befindet,
      und wenn der Abstand (Xa) im Bereich von 0 mm bis 10 mm innerhalb des Kanals (7a) liegt, die erste Seitenfläche (3a) einen minimalen Abstand (Y1a) zu der ersten Kanalwand (8a) aufweist, der im Bereich von 0,2 bis 5 mm liegt, und die zweite Seitenfläche (4a) einen minimalen Abstand (Y2a) zu der zweiten Kanalwand (9a) aufweist, der im Bereich von 0,2 bis 5 mm liegt,
   e) Positionieren des zweiten Formkörpers (1b), wobei
      die Fügefläche (2b) in einer senkrecht zur Kanaleintrittsebene (14b) verlaufenden Richtung einen Abstand (Xb) zur Kanaleintrittsebene (14b) aufweist, der im Bereich von 3 mm außerhalb des Kanals (7b) bis 10 mm innerhalb des Kanals (7b) liegt, wobei
      wenn der Abstand (Xb) im Bereich von > 0 mm bis 3 mm außerhalb des Kanals (7b) liegt, die Fügefläche (2b) sich zumindest teilweise im äußeren Kanalbereich (17b) befindet,
      und wenn der Abstand (Xb) im Bereich von 0 mm bis 10 mm innerhalb des Kanals (7b) liegt, der zweite Formkörper (1b) zusätzlich eine erste Seitenfläche (3b) und eine zweite Seitenfläche (4b) aufweist und die erste Seitenfläche (3b) einen minimalen Abstand (Y1b) zu der ersten Kanalwand (8b) aufweist, der im Bereich von 0,2 bis 5 mm liegt, und wobei die zweite Seitenfläche (4b) einen minimalen Abstand (Y2b) zu der zweiten Kanalwand (9b) aufweist, der im Bereich von 0,2 bis 5 mm liegt,
   f) Zuführen eines heißen Gases durch das Mittel (11a) zum Zuführen von Gas in den Kanal (7a), wobei sich das Ende (2a) des ersten Formkörpers (1a) erwärmt und wobei das in dem Ende (2a) enthaltene erste thermoplastische Polymer aufschmilzt,
   g) Zuführen eines heißen Gases durch das Mittel (11b) zum Zuführen von Gas in den Kanal (7b), wobei sich die Fügefläche (2b) des zweiten Formkörpers (1b) erwärmt und wobei das in der Fügefläche (2b) enthaltene zweite thermoplastische Polymer aufschmilzt,
   h) Entfernen des ersten Formkörpers (1a) aus der Positionierung gemäß Schritt d),
   i) Entfernen des zweiten Formkörpers (1b) aus der Positionierung gemäß Schritt e),
   j) in Kontakt bringen des erwärmten Endes (2a) des ersten Formkörpers (1a) mit der erwärmten Fügefläche (2b) des zweiten Formkörpers (1b) und abkühlen des erwärmten Endes (2a) des ersten
      Formkörpers (1a) und der erwärmten Fügefläche (2b) des zweiten Formkörpers (1b) während das erwärmte Ende (2a) und die erwärmte Fügefläche (2b) miteinander in Kontakt sind unter Ausbildung einer Schweißnaht zwischen dem ersten Formkörper (1a) und dem zweiten Formkörper (1b),
      wobei der erste Formkörper (1a) in Schritt d) so positioniert wird, dass, wenn der Abstand (Xa) im Bereich von > 0 mm bis 3 mm außerhalb des Kanals (7a) liegt, das Ende (2a) sich vollständig im äußeren Kanalbereich (17a) befindet und/oder der zweite Formkörper (1b) in Schritt e) so positioniert wird, dass, wenn der Abstand (Xb) im Bereich von > 0 mm bis 3 mm außerhalb des Kanals (7b) liegt, die Fügefläche (2b) sich vollständig im äußeren Kanalbereich (17b) befindet.

Es wurde überraschend gefunden, dass mit dem erfindungsgemäßen Verfahren das Ende (2a) des ersten Formkörpers (1a) und die Fügefläche (2b) des zweiten Formkörpers (1b) gleichmäßiger erwärmt werden können, wodurch bessere Schweißnahtqualitäten erhalten werden. Die besseren Schweißnahtqualitäten resultieren aus einem gleichmäßigeren Aufschmelzen des ersten thermoplastischen Polymers in Schritt f) und des zweiten thermoplastischen Polymers in Schritt g), wodurch jeweils eine gleichmäßigere Dicke der Schmelzeschicht erhalten wird, was dann zu einer besonders gleichmäßigen Dicke der Schweißnaht führt. Insbesondere werden höhere mechanische Festigkeiten im Vergleich zu Verfahren, wie sie im Stand der Technik beschrieben sind erreicht.

Zudem ist das erfindungsgemäße Verfahren schneller durchführbar als die im Stand der Technik beschriebenen Verfahren und resultiert daher in kürzeren Zykluszeiten als die im Stand der Technik beschriebenen Verfahren.

Im Rahmen der vorliegenden Erfindung wird unter der Zykluszeit der Zeitraum vom Beginn der Positionierung des ersten Formkörpers (1a) und des zweiten Formkörpers (1b) in den Schritten d) und e) bis zum Erhalt der Schweißnaht zwischen dem ersten Formkörper (1a) und dem zweiten Formkörper (1b) in Schritt j) verstanden.

Erfolgt die Positionierung des ersten Formkörpers (1a) in Schritt d) und des zweiten Formkörpers (1b) in Schritt e) nicht gleichzeitig, so ist mit dem Beginn der Positionierung der Beginn der Positionierung desjenigen Formkörpers, der zuerst positioniert wird, gemeint. Dann wird unter der Zykluszeit also der Zeitraum vom Beginn der Positionierung des Formkörpers, der zuerst positioniert wird, bis zum Erhalt der Schweißnaht zwischen dem ersten Formkörper (1a) und dem zweiten Formkörper (1b) in Schritt j) verstanden.

Die Zykluszeit im erfindungsgemäßen Verfahren liegt beispielsweise im Bereich von 5 bis 40 s (Sekunden), bevorzugt im Bereich von 5 bis 25 s und insbesondere bevorzugt im Bereich von 5 bis 20 s.

Nachfolgend wird das erfindungsgemäße Verfahren näher erläutert.

### Schritt a)

In Schritt a) wird der erste Formkörper (1a) bereitgestellt.

Der erste Formkörper (1a) umfasst erfindungsgemäß eine erste Seitenfläche (3a), eine zweite Seitenfläche (4a) und ein Ende (2a). Das Ende (2a) enthält ein erstes thermoplastisches Polymer.

"Ein erstes thermoplastisches Polymer" bedeutet im Rahmen der vorliegenden Erfindung sowohl genau ein erstes thermoplastisches Polymer, als auch eine Mischung aus zwei oder mehreren ersten thermoplastischen Polymeren.

Als erstes thermoplastisches Polymer eignen sich alle dem Fachmann bekannten thermoplastischen Polymere. Bevorzugt ist das erste thermoplastische Polymer ausgewählt aus der Gruppe bestehend aus amorphen thermoplastischen Polymeren und teilkristallinen thermoplastischen Polymeren.

Das erste thermoplastische Polymer ist daher beispielsweise ausgewählt aus der Gruppe bestehend aus Polyamiden, Polyoxymethylenen, Polysulfonen, Polyphenylsulfonen und Polybutylenterephthalaten.

Gegenstand der vorliegenden Erfindung ist daher auch ein Verfahren, bei dem das in dem Ende (2a) enthaltene erste thermoplastische Polymer ausgewählt ist aus der Gruppe bestehend aus Polyamiden, Polyoxymethylenen, Polysulfon, Polyphenylensulfon und Polybutylenterephthalaten.

Das erste thermoplastische Polymer weist üblicherweise eine Glasübergangstemperatur (T_{G1}) auf. Beispielsweise liegt die Glasübergangstemperatur (T_{G1}) des ersten thermoplastischen Polymers im Bereich von 50 bis 350 °C, bevorzugt im Bereich von 150 bis 270 °C und insbesondere bevorzugt im Bereich von 170 bis 240 °C, bestimmt mittels Dynamischer Differenzkalorimetrie (Differential Scanning Calorimetry; DSC).

Gegenstand der vorliegenden Erfindung ist daher auch ein Verfahren, bei dem das erste thermoplastische Polymer eine Glasübergangstemperatur (T_{G1}), die im Bereich von 50 bis 350 °C liegt, aufweist.

Ist das erste thermoplastische Polymer ein teilkristallines thermoplastisches Polymer, so weist das erste thermoplastische Polymer üblicherweise zusätzlich eine Schmelztemperatur (T_{M1}) auf. Beispielsweise liegt die Schmelztemperatur (T_{M1}) des ersten thermoplastischen Polymers dann im Bereich von 80 bis 400 °C, bevorzugt im Bereich von 140 bis 320 °C und insbesondere bevorzugt im Bereich von 160 bis 300 °C, bestimmt mittels Dynamischer Differenzkalorimetrie (Differential Scanning Calorimetry; DSC).

Gegenstand der vorliegenden Erfindung ist daher auch ein Verfahren, bei dem das erste thermoplastische Polymer, wenn das erste thermoplastische Polymer ein teilkristallines thermoplastisches Polymer ist, eine Schmelztemperatur (T_{M1}), die im Bereich von 80 bis 400 °C liegt, aufweist.

Das Ende (2a) des ersten Formkörpers (1a) kann außer dem ersten thermoplastischen Polymer zusätzlich weitere Komponenten enthalten. Derartige weitere Komponenten sind dem Fachmann bekannt und beispielsweise ausgewählt aus der Gruppe bestehend aus Füllstoffen und Additiven.

Als Füllstoffe eigenen sich alle dem Fachmann bekannten Füllstoffe für thermoplastische Polymere. Derartige Füllstoffe sind beispielsweise ausgewählt aus der Gruppe bestehend aus Glaskugeln, Glasfasern, Kohlefasern, Carbonnanotubes und Kreide.

Geeignete Additive sind dem Fachmann ebenfalls bekannt und beispielsweise ausgewählt aus der Gruppe bestehend aus Antinukleierungsmitteln, Stabilisatoren, Endgruppenfunktionalisierern und Farbstoffen.

Bevorzugt enthält der erste Formkörper (1a) das erste thermoplastische Polymer. Insbesondere bevorzugt enthält der erste Formkörper (1a) dieselben Komponenten wie das Ende (2a). Wenn das Ende (2a) also außer dem ersten thermoplastischen Polymer zusätzlich weitere Komponenten enthält, so ist es bevorzugt, dass der erste Formkörper (1a) ebenfalls außer dem ersten thermoplastischen Polymer die weiteren Komponenten enthält.

Für die Gewichtsprozente des ersten thermoplastischen Polymers und der weiteren Komponenten gelten dann die zuvor beschriebenen Ausführungen und Bevorzugungen entsprechend.

Das Ende (2a) des ersten Formkörpers (1a) kann in allen dem Fachmann bekannten Formen ausgestaltet sein. Beispielsweise kann das Ende (2a) flächenförmig, kantenförmig oder linienförmig ausgestaltet sein. Das Ende (2a) ist dann also beispielsweise als Fläche, als Linie oder als Kante ausgestaltet.

Das Ende (2a) ist beispielsweise als Fläche ausgestaltet, wenn die erste Seitenfläche (3a), die zweite Seitenfläche (4a) und das Ende (2a) gemeinsam eine Rippe ausbilden.

Wenn die erste Seitenfläche (3a), die zweite Seitenfläche (4a) und das Ende (2a) gemeinsam eine konvexe Form, im Querschnitt beispielsweise einen Halbkreis, ausbilden, so ist das Ende als Linie ausgestaltet.

Als Kante ist das Ende (2a) beispielsweise ausgestaltet, wenn die erste Seitenfläche (3a) und die zweite Seitenfläche (4a) einen spitzen Winkel zueinander ausbilden und sich berühren.

Die erste Seitenfläche (3a) und die zweite Seitenfläche (4a) können ebenfalls in allen dem Fachmann bekannten Formen ausgestaltet sein. Bevorzugt sind die erste Seitenfläche (3a) und die zweite Seitenfläche (4a) flächenförmig ausgestaltet. Dabei ist es insbesondere bevorzugt, dass die erste Seitenfläche (3a) im Wesentlichen parallel zur zweiten Seitenfläche (4a) ausgerichtet ist.

"im Wesentlichen parallel" bedeutet im Rahmen der vorliegenden Erfindung nicht nur eine genau parallele Ausrichtung der ersten Seitenfläche (3a) und der zweiten Seitenfläche (4a), sondern auch eine Abweichung von der parallelen Ausrichtung von maximal 30°, bevorzugt von maximal 15° und insbesondere bevorzugt von maximal 1°.

Gegenstand der vorliegenden Erfindung ist daher auch ein Verfahren, bei dem die erste Seitenfläche (3a) des ersten Formkörpers (1a) im Wesentlichen parallel zur zweiten Seitenfläche (4a) des ersten Formkörpers (1a) ausgerichtet ist.

Darüber hinaus ist es bevorzugt, dass das Ende (2a) flächenförmig ausgebildet ist und die erste Seitenfläche (3a) im Wesentlichen senkrecht zu dem Ende (2a) ausgerichtet ist und die zweite Seitenfläche (4a) im Wesentlichen senkrecht zu dem Ende (2a) ausgerichtet ist. In dieser Ausführungsform ist es bevorzugt, dass die erste Seitenfläche (3a), die zweite Seitenfläche (4a) und das Ende (2a) eine Rippe des ersten Formkörpers (1a) ausbilden.

Gegenstand der vorliegenden Erfindung ist weiterhin ein Verfahren, bei dem das Ende (2a) des ersten Formkörpers (1a) flächenförmig ausgebildet ist und die erste Seitenfläche (3a) und die zweite Seitenfläche (4a) des ersten Formkörpers (1a) jeweils im Wesentlichen senkrecht zu dem Ende (2a) ausgerichtet sind.

"Im Wesentlichen senkrecht" bedeutet im Rahmen der vorliegenden Erfindung nicht nur eine genau senkrechte Ausrichtung der ersten Seitenfläche (3a) zu dem Ende (2a), sondern auch eine Abweichung von der senkrechten Ausrichtung von maximal +/- 30°, bevorzugt von maximal +/- 15° und insbesondere bevorzugt von maximal +/- 1°.

Entsprechende Ausführungen gelten im Zusammenhang mit der im Wesentlichen senkrechten Ausrichtung der zweiten Seitenfläche (4a) zu dem Ende (2a).

Die Bereitstellung des ersten Formkörpers (1a) in Schritt a) kann nach allen dem Fachmann bekannten Methoden erfolgen, beispielsweise mittels Spritzgießen, Extrusion oder Blasformen.

Diese Verfahren sind dem Fachmann als solche bekannt.

### Schritt b)

In Schritt b) wird der zweite Formkörper (1b) bereitgestellt. Der zweite Formkörper (1b) umfasst eine Fügefläche (2b). Diese Fügefläche (2b) enthält ein zweites thermoplastisches Polymer.

"Ein zweites thermoplastisches Polymer" bedeutet im Rahmen der vorliegenden Erfindung sowohl genau ein zweites thermoplastisches Polymer als auch eine Mischung aus zwei oder mehreren zweiten thermoplastischen Polymeren.

Für das in der Fügefläche (2b) enthaltene zweite thermoplastische Polymer gelten die zuvor beschriebenen Ausführungen und Bevorzugungen für das in dem Ende (2a) enthaltene erste thermoplastische Polymer entsprechend.

Gegenstand der vorliegenden Erfindung ist daher auch ein Verfahren, bei dem das in der Fügefläche (2b) enthaltene zweite thermoplastische Polymer ausgewählt ist aus der Gruppe bestehend aus Polyamiden, Polyoxymethylenen, Polysulfon, Polyphenylensulfon und Polybutylenterephthalaten.

Gegenstand der vorliegenden Erfindung ist daher außerdem ein Verfahren, bei dem das in dem Ende (2a) enthaltene erste thermoplastische Polymer ausgewählt ist aus der Gruppe bestehend aus Polyamiden, Polyoxymethylenen, Polysulfon, Polyphenylsulfon und Polybutylenterephthalaten und/oder das in der Fügefläche (2b) enthaltene zweite thermoplastische Polymer ausgewählt ist aus der Gruppe bestehend aus Polyamiden, Polyoxymethylenen, Polysulfon, Polyphenylsulfon und Polybutylentherephthalaten.

Besonders bevorzugt sind das in dem Ende (2a) enthaltene erste thermoplastische Polymer und das in der Fügefläche (2b) enthaltene zweite thermoplastische Polymer gleich.

Gegenstand der vorliegenden Erfindung ist daher auch ein Verfahren, bei dem das in dem Ende (2a) enthaltene erste thermoplastische Polymer und das in der Fügefläche (2b) enthaltene zweite thermoplastische Polymer gleich sind.

Sind das erste thermoplastische Polymer und das zweite thermoplastische Polymer gleich, so bedeutet dies, dass das erste thermoplastische Polymer dasselbe thermoplastische Polymer ist wie das zweite thermoplastische Polymer. Besonders bevorzugt wurden das erste thermoplastische Polymer und das zweite thermoplastische Polymer dann nach demselben Verfahren hergestellt und weisen daher dieselben Eigenschaften beispielsweise denselben Schmelzpunkt, dieselbe Molekulargewichtsverteilung, dasselbe Molekulargewicht und dieselbe Schmelzeviskosität auf.

Das zweite thermoplastische Polymer weist üblicherweise eine Glasübergangstemperatur (T_{G2}) auf. Beispielsweise liegt die Glasübergangstemperatur (T_{G2}) des zweiten thermoplastischen Polymers im Bereich von 50 bis 350 °C, bevorzugt im Bereich von 150 bis 270 °C und insbesondere bevorzugt im Bereich von 170 bis 240 °C, bestimmt mittels Dynamischer Differenzkalorimetrie (Differential Scanning Calorimetry; DSC).

Gegenstand der vorliegenden Erfindung ist daher auch ein Verfahren, bei dem das zweite thermoplastische Polymer eine Glasübergangstemperatur (T_{G2}), die im Bereich von 50 bis 350 °C liegt, aufweist.

Ist das zweite thermoplastische Polymer ein teilkristallines thermoplastisches Polymer, so weist das zweite thermoplastische Polymer üblicherweise zusätzlich eine Schmelztemperatur (T_{M2}) auf. Beispielsweise liegt die Schmelztemperatur (T_{M2}) des zweiten thermoplastischen Polymers dann im Bereich von 80 bis 400 °C, bevorzugt im Bereich von 140 bis 320 °C und insbesondere bevorzugt im Bereich von 160 bis 300 °C, bestimmt mittels Dynamischer Differenzkalorimetrie (Differential Scanning Calorimetry; DSC).

Gegenstand der vorliegenden Erfindung ist daher auch ein Verfahren, bei dem das zweite thermoplastische Polymer, wenn das zweite thermoplastische Polymer ein teilkristallines thermoplastisches Polymer ist, eine Schmelztemperatur (T_{M2}), die im Bereich von 80 bis 400 °C liegt, aufweist.

Die Fügefläche (2b) des zweiten Formkörpers (1b) kann außer dem zweiten thermoplastischen Polymer zusätzlich weitere Komponenten enthalten. Für die weiteren Komponenten, die gegebenenfalls in der Fügefläche (2b) enthalten sind, gelten die zuvor für die weiteren Komponenten, die gegebenenfalls in dem Ende (2a) enthalten sind, beschriebenen Ausführungen und Bevorzugungen entsprechend. Bevorzugt enthält der zweite Formkörper (1b) das zweite thermoplastische Polymer. Insbesondere bevorzugt enthält der zweite Formkörper (1b) dieselben Komponenten wie die Fügefläche (2b). Wenn die Fügefläche (2b) also außer dem zweiten thermoplastischen Polymer zusätzlich die weiteren Komponenten enthält, so ist es bevorzugt, dass der zweite Formkörper (1b) ebenfalls außer dem zweiten thermoplastischen Polymer die weiteren Komponenten enthält.

Die Fügefläche (2b) des zweiten Formkörpers (1b) ist bevorzugt flächenförmig ausgestaltet.

Bevorzugt weist der zweite Formkörper (1b) zusätzlich eine erste Seitenfläche (3b) und eine zweite Seitenfläche (4b) auf. Für die erste Seitenfläche (3b) und die zweite Seitenfläche (4b) gelten dann die zuvor beschriebenen Ausführungen und Bevorzugungen für die erste Seitenfläche (3a) und die zweite Seitenfläche (4a) des ersten Formkörpers (1a) entsprechend.

In dieser Ausführungsform entspricht die Fügefläche (2b) des zweiten Formkörpers (1b) dem Ende (2a) des ersten Formkörpers (1a). In dieser Ausführungsform gelten daher für die Fügefläche (2b) des zweiten Formkörpers (1b) die zuvor beschriebenen Ausführungen und Bevorzugungen für das Ende (2a) des ersten Formkörpers (1a) entsprechend.

Gegenstand der vorliegenden Erfindung ist daher auch ein Verfahren, bei dem die erste Seitenfläche (3b) des zweiten Formkörpers (1b) im Wesentlichen parallel zur zweiten Seitenfläche (4b) des zweiten Formkörpers (1b) ausgerichtet ist.

"Im Wesentlichen parallel" bedeutet im Rahmen der vorliegenden Erfindung nicht nur eine genau parallele Ausrichtung der ersten Seitenfläche (3b) und der zweiten Seitenfläche (4b), sondern auch eine Abweichung von der parallelen Ausrichtung von maximal 30°, bevorzugt von maximal 15° und insbesondere bevorzugt von maximal 1°.

Gegenstand der vorliegenden Erfindung ist weiterhin ein Verfahren, bei dem die Fügefläche (2b) des zweiten Formkörpers (1b) flächenförmig ausgebildet ist und die erste Seitenfläche (3b) und die zweite Seitenfläche (4b) des zweiten Formkörpers (1b) jeweils im Wesentlichen senkrecht zu der Fügefläche (2b) ausgerichtet sind.

"Im Wesentlichen senkrecht" bedeutet im Rahmen der vorliegenden Erfindung sowohl, dass die erste Seitenfläche (3b) und die zweite Seitenfläche (4b) jeweils unabhängig voneinander genau senkrecht zu der Fügefläche (3b) ausgerichtet sind, als auch, dass die Abweichung von der genau senkrechten Ausrichtung jeweils maximal +/- 30°, bevorzugt maximal +/- 15° und insbesondere bevorzugt maximal +/- 1° betragen kann.

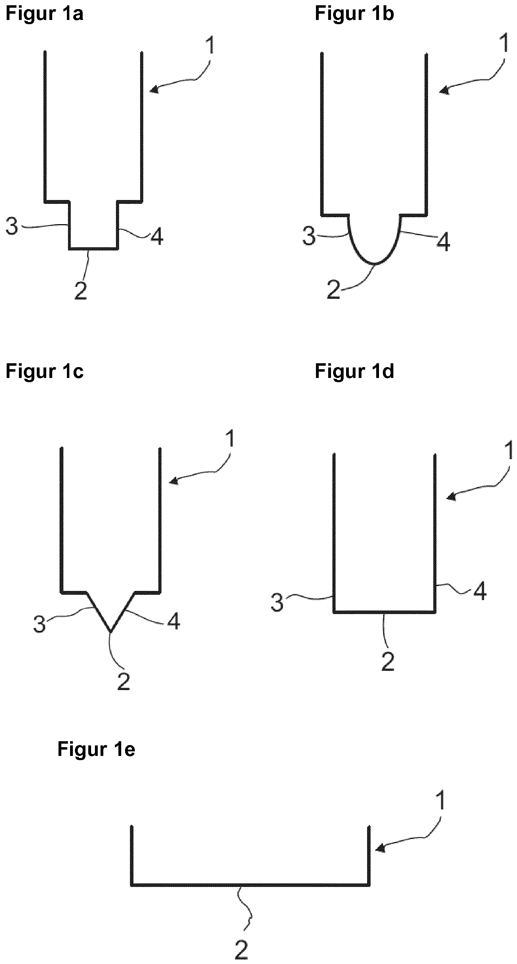

Die Figuren 1a bis 1e zeigen beispielhaft Formkörper 1. In den Figuren 1a bis 1e haben gleiche Bezugszeichen dieselbe Bedeutung. In den Figuren 1a bis 1d weist der Formkörper eine erste Seitenfläche 3, eine zweite Seitenfläche 4 und ein Ende 2 auf. Es versteht sich von selbst, dass, wenn der in den Figuren 1a bis 1e gezeigte Formkörper ein zweiter Formkörper (1b) ist, das Ende 2 der Fügefläche (2b) entspricht.

In den Figuren 1a und 1d ist das Ende 2 jeweils flächenförmig ausgestaltet. Die erste Seitenfläche 3 und die zweite Seitenfläche 4 sind parallel zueinander ausgerichtet und sind jeweils senkrecht zu dem Ende 2 ausgerichtet. In Figur 1a bilden die erste Seitenfläche 3, die zweite Seitenfläche 4 und das Ende 2 zusammen eine Rippe des Formkörpers 1.

In Figur 1b ist das Ende 2 linienförmig ausgestaltet. Die erste Seitenfläche 3, die zweite Seitenfläche 4 und das Ende 2 bilden zusammen eine konvexe Form.

In Figur 1c ist das Ende 2 kantenförmig ausgestaltet. Die erste Seitenfläche 3 und die zweite Seitenfläche 4 bilden zueinander einen spitzen Winkel und berühren sich am Ende 2.

Der in Figur 1e gezeigte Formkörper 1 weist nur eine Fügefläche 2 auf. Es handelt sich somit um einen zweiten Formkörper (1b). Die Fügefläche 2 kann die gesamte, mit dem Bezugszeichen 2 versehene Fläche in Figur 1e sein, ebenso kann die Fügefläche auch nur einen Teilbereich dieser Fläche umfassen.

### Schritt c)

In Schritt c) wird ein Werkzeug (5) bereitgestellt. Das Werkzeug (5) weist eine erste Außenfläche (6a) und eine zweite Außenfläche (6b) auf.

Die erste Außenfläche (6a) umfasst einen Kanal (7a). Der Kanal (7a) weist einen Boden (10a), eine erste Kanalwand (8a) mit einem ersten höchsten Punkt (12a) und eine zweite Kanalwand (9a) mit einem zweiten höchsten Punkt (13a) auf. Der Boden (10a) umfasst Mittel (11a) zum Zuführen von Gas in den Kanal (7a). Parallel zu der ersten Außenfläche (6a) verläuft eine Kanaleintrittsebene (14a) durch den ersten höchsten Punkt (12a). Zwischen der Projektionslinie (15a) des ersten höchsten Punkts (12a) längs einer senkrecht zur Kanaleintrittsebene (14a) verlaufenden Richtung und der Projektionslinie (16a) des zweiten höchsten Punkts (13a) längs einer senkrecht zur Kanaleintrittsebene (14a) verlaufenden Richtung befindet sich der äußere Kanalbereich (17a).

Der Kanal (7a) kann sowohl oberhalb der ersten Außenfläche (6a) angeordnet sein, als auch zumindest teilweise innerhalb der ersten Außenfläche (6a). Ist der Kanal oberhalb der ersten Außenfläche (6a) angeordnet, so sind die erste Kanalwand (8a) und die zweite Kanalwand (9a) beispielsweise auf der ersten Außenfläche (6a) befestigt, beispielsweise durch Schweißen, und bilden so den Kanal (7a) aus.

Die Projektionslinie (15a) des ersten höchsten Punkts (12a) längs einer senkrecht zur Kanaleintrittsebene (14a) verlaufenden Richtung ist diejenige Gerade, die senkrecht zur Kanaleintrittsebene (14a) liegt und durch den ersten höchsten Punkt (12a) verläuft.

Entsprechendes gilt für die Projektionslinie (16a) des zweiten höchsten Punkts (13a) längs einer senkrecht zur Kanaleintrittsebene (14a) verlaufenden Richtung. Die Projektionslinie (16a) des zweiten höchsten Punkts (13a) längs einer senkrecht zur Kanaleintrittsebene (14a) verlaufenden Richtung ist diejenige Gerade, die senkrecht zur Kanaleintrittsebene (14a) liegt und durch den zweiten höchsten Punkt (13a) verläuft.

Der erste höchste Punkt (12a) der ersten Kanalwand (8a) ist derjenige Punkt, der in einer senkrechten Richtung am weitesten entfernt ist von der Ebene des Bodens (10a) des Kanals (7a) der ersten Außenfläche (6a), der also den größten Abstand in senkrechter Richtung von der Ebene des Bodens (10a) aufweist. Weist die erste Kanalwand (8a) zwei oder mehrere höchste Punkte auf, so ist der erste höchste Punkt (12a) der höchste Punkt, der den kleinsten Abstand zu dem Kanal (7a) aufweist.

Entsprechende Ausführungen gelten für den zweiten höchsten Punkt (13a).

Der zweite höchste Punkt (13a) der zweiten Kanalwand (9a) ist also derjenige Punkt, der in einer senkrechten Richtung am weitesten entfernt ist von der Ebene des Bodens (10a) des Kanals (7a) der ersten Außenfläche (6a), der also den größten Abstand in senkrechter Richtung von der Ebene des Bodens (10a) aufweist.

Weist die zweite Kanalwand (9a) zwei oder mehrere höchste Punkte auf, so ist der zweite höchste Punkt (13a) der höchste Punkt, der den kleinsten Abstand zu dem Kanal (7a) aufweist.

Weisen der erste höchste Punkt (12a) und der zweite höchste Punkt (13a) einen unterschiedlichen Abstand in senkrechter Richtung von der Ebene des Bodens (10a) auf, so ist der erste höchste Punkt (12a) der höchste Punkt, der den kleineren Abstand in senkrechter Richtung von der Ebene des Bodens (10a) aufweist. Der höchste Punkt, der den größeren Abstand in senkrechter Richtung von der Ebene des Bodens (10a) aufweist, ist dann der zweite höchste Punkt (13a).

Der Abstand des ersten höchsten Punktes (12a) von der Ebene des Bodens (10a) in einer senkrechten Richtung liegt beispielsweise im Bereich von 2 bis 30 mm, bevorzugt im Bereich von 5 bis 20 mm und insbesondere bevorzugt im Bereich von 11 bis 15 mm.

Der Abstand zwischen dem ersten höchsten Punkt (12a) und der Ebene des Bodens (10a) in einer senkrechten Richtung wird auch als Kanaltiefe bezeichnet. Die Kanaltiefe liegt daher beispielsweise im Bereich von 2 bis 30 mm, bevorzugt im Bereich von 5 bis 20 mm und insbesondere bevorzugt im Bereich von 11 bis 15 mm.

Der Abstand des zweiten höchsten Punktes (13a) von der Ebene des Bodens (10a) in einer senkrechten Richtung liegt beispielsweise im Bereich von 2 bis 30 mm, bevorzugt im Bereich von 5 bis 20 mm und insbesondere bevorzugt im Bereich von 11 bis 15 mm.

Der Boden (10a) des Kanals (7a) kann alle dem Fachmann bekannten Formen aufweisen. Beispielsweise kann er planar oder gewölbt ausgestaltet sein. Bevorzugt ist der Boden (10a) planar, also flächenförmig, ausgestaltet.

Die Ebene des Bodens (10a) ist erfindungsgemäß diejenige Ebene, die parallel zu der Kanaleintrittsebene (14a) und durch den Schnittpunkt einer Mittellinie (Ma) mit dem Boden (10a) verläuft, wobei die Mittellinie (Ma) senkrecht durch die Kanaleintrittsebene (14a) verläuft und zu der Projektionslinie (15a) des ersten höchsten Punkts (12a) und der Projektionslinie (16a) des zweiten höchsten Punkts (13a) jeweils den gleichen Abstand aufweist. Die Mittellinie (Ma) verläuft außerdem parallel zu der Projektionslinie (15a) und der Projektionslinie (16a).

Dem Fachmann ist klar, dass, wenn die Mittellinie (Ma) durch das Mittel (11a) zum Zuführen von Gas in den Kanal (7a) verläuft und die Mittellinie (Ma) daher keinen Schnittpunkt mit dem Boden (10a) aufweist, der Schnittpunkt der Mittellinie (Ma) mit dem Boden (10a) an der Stelle angenommen wird, an der er läge, wenn der Boden (10a) das Mittel (11a) zum Zuführen von Gas in den Kanal (7a) nicht umfassen würde.

Der Boden (10a) umfasst erfindungsgemäß Mittel (11a) zum Zuführen von Gas in den Kanal (7a).

Als Mittel (11a) zum Zuführen von Gas in den Kanal (7a) eignen sich alle dem Fachmann bekannten Mittel (11a), die sich zum Zuführen von Gas eignen, wie beispielsweise Düsen, Bohrungen und/oder Schlitze.

Das Mittel (11a) zum Zuführen von Gas in den Kanal (7a) weist üblicherweise einen höchsten Punkt auf.

Der höchste Punkt des Mittels (11a) zum Zuführen von Gas in den Kanal (7a) liegt innerhalb des Kanals. Der höchste Punkt des Mittels (11a) zum Zuführen von Gas in den Kanal (7a) ist der Punkt des Mittels (11a) zum Zuführen von Gas in den Kanal (7a), der in einer senkrecht zur Kanaleintrittsebene (14a) verlaufenden Richtung den kleinsten Abstand von der Kanaleintrittsebene (14a) aufweist. Besonders bevorzugt liegt der höchste Punkt des Mittels (11a) zum Zuführen von Gas in den Kanal (7a) in einer senkrecht zur Kanaleintrittsebene (14a) verlaufenden Richtung in einem Abstand zur Kanaleintrittsebene (14a) von > 10 mm innerhalb des Kanals (7a).

In einer weiteren bevorzugten Ausführungsform der vorliegenden Erfindung liegt der höchste Punkt des Mittels (11a) zum Zuführen von Gas in den Kanal (7a) in einer senkrecht zur Kanaleintrittsebene (14a) verlaufenden Richtung in einem Abstand zur Kanaleintrittsebene (14a) im Bereich von 1 bis 8,5 mm.

Es versteht sich von selbst, dass der Abstand des höchsten Punkts des Mittels (11a) zum Zuführen von Gas in den Kanal (7a) von der Kanaleintrittsebene (14a) in einer senkrecht zur Kanaleintrittsebene (14a) verlaufenden Richtung üblicherweise so groß ist, dass das Ende (2a) des ersten Formkörpers (1a) bei der Positionierung in Schritt d) den höchsten Punkt des Mittels (11a) zum Zuführen von Gas in den Kanal (7a) nicht berührt.

Es ist daher weiterhin bevorzugt, dass der Abstand des höchsten Punkts des Mittels (11a) zum Zuführen von Gas in den Kanal (7a) von der Kanaleintrittsebene (14a) in einer senkrecht zur Kanaleintrittsebene (14a) verlaufenden Richtung so groß ist, dass bei der Positionierung des ersten Formkörpers (1a) in Schritt d) das Ende (2a) des ersten Formkörpers (1a) einen Abstand zu dem höchsten Punkt des Mittels (11a) zum Zuführen von Gas in den Kanal (7a) in einer senkrecht zur Kanaleintrittsebene (14a) verlaufenden Richtung von mindestens 0,5 mm aufweist.

Die erste Kanalwand (8a) ist bevorzugt im Wesentlichen parallel zur zweiten Kanalwand (9a) ausgerichtet.

"Im Wesentlichen parallel" bedeutet im Rahmen der vorliegenden Erfindung sowohl eine genau parallele Ausrichtung der ersten Kanalwand (8a) zu der zweiten Kanalwand (9a) als auch eine Abweichung von der parallelen Ausrichtung von maximal 30°, bevorzugt von maximal 15° und insbesondere bevorzugt von maximal 1°.

Gegenstand der vorliegenden Erfindung ist daher auch ein Verfahren, bei dem die erste Kanalwand (8a) des Kanals (7a) der ersten Außenfläche (6a) im Wesentlichen parallel zu der zweiten Kanalwand (9a) des Kanals (7a) der ersten Außenfläche (6a) ausgerichtet ist.

Darüber hinaus ist es bevorzugt, dass die erste Kanalwand (8a) im Wesentlichen senkrecht zur Ebene des Bodens (10a) ausgerichtet ist. Ebenso ist es bevorzugt, dass die zweite Kanalwand (9a) im Wesentlichen senkrecht zur Ebene des Bodens (10a) ausgerichtet ist.

Gegenstand der vorliegenden Erfindung ist weiterhin ein Verfahren, bei dem die erste Kanalwand (8a) des Kanals (7a) im Wesentlichen senkrecht zur Ebene des Bodens (10a) ausgerichtet ist und die zweite Kanalwand (9a) des Kanals (7a) im Wesentlichen senkrecht zur Ebene des Bodens (10a) ausgerichtet ist.

Insbesondere bevorzugt ist der Boden (10a) flächenförmig ausgestaltet und die erste Kanalwand (8a) und die zweite Kanalwand (9a) sind jeweils im Wesentlichen senkrecht zu dem Boden (10a) ausgerichtet.

"Im Wesentlichen senkrecht" bedeutet im Rahmen der vorliegenden Erfindung sowohl eine jeweils unabhängig voneinander genau senkrechte Ausrichtung der ersten Kanalwand (8a) und der zweiten Kanalwand (9a) zu der Ebene des Bodens (10a) als auch jeweils unabhängig voneinander eine Abweichung von der senkrechten Ausrichtung von maximal +/- 30°, bevorzugt von maximal +/- 15° und besonders bevorzugt von maximal +/- 1°.

Die erste Kanalwand (8a), die zweite Kanalwand (9a) und der Boden (10a) können aus allen Materialien aufgebaut sein, die zur Verwendung bei den Temperaturen, bei denen das erfindungsgemäße Verfahren durchgeführt wird, geeignet sind.

Die erste Kanalwand (8a), die zweite Kanalwand (9a) und der Boden (10a) können außerdem beheizbar sein.

Die zweite Außenfläche (6b) umfasst erfindungsgemäß einen Kanal (7b). Der Kanal (7b) weist einen Boden (10b), eine erste Kanalwand (8b) mit einem ersten höchsten Punkt (12b) und eine zweite Kanalwand (9b) mit einem zweiten höchsten Punkt (13b) auf. Der Boden (10b) umfasst Mittel (11b) zum Zuführen von Gas in den Kanal (7b). Parallel zu der zweiten Außenfläche (6b) verläuft eine Kanaleintrittsebene (14b) durch den ersten höchsten Punkt (12b). Zwischen der Projektionslinie (15b) des ersten höchsten Punkts (12b) längs einer senkrecht zur Kanaleintrittsebene (14b) verlaufenden Richtung und der Projektionslinie (16b) des zweiten höchsten Punkts (13b) längs einer senkrecht zur Kanaleintrittsebene (14b) verlaufenden Richtung befindet sich der äußere Kanalbereich (17b).

Für die zweite Außenfläche (6b) gelten die zuvor beschriebenen Ausführungen und Bevorzugungen für die erste Außenfläche (6a) entsprechend.

Ebenso gelten für den Kanal (7b) die vorstehend beschriebenen Ausführungen und Bevorzugungen für den Kanal (7a) entsprechend. Entsprechendes gilt für den Boden (10b), die erste Kanalwand (8b) mit dem ersten höchsten Punkt (12b), die zweite Kanalwand (9b) mit dem zweiten höchsten Punkt (13b) und das Mittel (11b) zum Zuführen von Gas in den Kanal (7b). Für diese gelten die zuvor beschriebenen Ausführungen und Bevorzugungen für den Boden (10a), die erste Kanalwand (8a) mit dem ersten höchsten Punkt (12a), die zweite Kanalwand (9a) mit dem zweiten höchsten Punkt (13a) und das Mittel (11a) zum Zuführen von Gas in den Kanal (7a) entsprechend.

Gegenstand der vorliegenden Erfindung ist daher auch ein Verfahren, bei dem die erste Kanalwand (8b) des Kanals (7b) der zweiten Außenfläche (6b) im Wesentlichen parallel zu der zweiten Kanalwand (9b) des Kanals (7b) der zweiten Außenfläche (6b) ausgerichtet ist.

"im Wesentlichen parallel" bedeutet im Rahmen der vorliegenden Erfindung sowohl eine genau parallele Ausrichtung der ersten Kanalwand (8b) zu der zweiten Kanalwand (9b) als auch eine Abweichung von der parallelen Ausrichtung von maximal 30°, bevorzugt von maximal 15° und insbesondere bevorzugt von maximal 1°.

Gegenstand der vorliegenden Erfindung ist daher auch ein Verfahren, bei dem die erste Kanalwand (8a) des Kanals (7a) der ersten Außenfläche (6a) im Wesentlichen parallel zu der zweiten Kanalwand (9a) des Kanals (7a) der ersten Außenfläche (6a) ausgerichtet ist und/oder die erste Kanalwand (8b) des Kanals (7b) der zweiten Außenfläche (6b) im Wesentlichen parallel zu der zweiten Kanalwand (9b) des Kanals (7b) der zweiten Außenfläche (6b) ausgerichtet ist.

Gegenstand der vorliegenden Erfindung ist weiterhin ein Verfahren, bei dem die erste Kanalwand (8b) des Kanals (7b) im Wesentlichen senkrecht zur Ebene des Bodens (10b) ausgerichtet ist und die zweite Kanalwand (9b) des Kanals (7b) im Wesentlichen senkrecht zur Ebene des Bodens (10b) ausgerichtet ist.

"Im Wesentlichen senkrecht" bedeutet im Rahmen der vorliegenden Erfindung sowohl eine jeweils unabhängig voneinander genau senkrechte Ausrichtung der ersten Kanalwand (8b) und der zweiten Kanalwand (9b) zu der Ebene des Bodens (10b) als auch jeweils unabhängig voneinander eine Abweichung von der genau senkrechten Ausrichtung von maximal +/- 30°, bevorzugt von maximal +/- 15° und insbesondere bevorzugt von maximal +/- 1°.

Erfindungsgemäß bevorzugt liegt die erste Außenfläche (6a) des in Schritt c) bereitgestellten Werkzeugs (5) der zweiten Außenfläche (6b) des Werkzeugs (5) gegenüber.

Gegenstand der vorliegenden Erfindung ist daher auch ein Verfahren, bei dem die erste Außenfläche (6a) des in Schritt c) bereitgestellten Werkzeugs (5) der zweiten Außenfläche (6b) des Werkzeugs (5) gegenüber liegt.

Unter "gegenüber" wird räumlich gesehen gegenüber verstanden. Es ist dabei insbesondere bevorzugt, dass die erste Außenfläche (6a) im Wesentlichen parallel zur zweiten Außenfläche (6b) ausgerichtet ist.

"im Wesentlichen parallel" bedeutet im Rahmen der vorliegenden Erfindung sowohl, dass die erste Außenfläche (6a) genau parallel zur zweiten Außenfläche (6b) ausgerichtet ist, als auch, dass die Abweichung von der parallelen Ausrichtung maximal 30°, bevorzugt maximal 15° und insbesondere bevorzugt maximal 1° ist.

Die erste Außenfläche (6a) ist üblicherweise mit der zweiten Außenfläche (6b) verbunden. Beispielsweise sind die erste Außenfläche (6a) und die zweite Außenfläche (6b) über ein Mittelstück (20) verbunden. Dieses Mittelstück (20) kann beliebig ausgestaltet sein und beispielsweise Mittel umfassen, die es ermöglichen, Gas in das Mittel (11a) zum Zuführen von Gas in den Kanal (7a) und in das Mittel (11b) zum Zuführen von Gas in den Kanal (7b) einzuleiten. Darüber hinaus kann das Mittelstück (20) beispielsweise Heizplatten umfassen, um das Gas und/oder die erste Außenfläche (6a), die zweite Außenfläche (6b) sowie gegebenenfalls die erste Kanalwand (8a), (8b), die zweite Kanalwand (9a), (9b) und/oder den Boden (10a), (10b) zu erwärmen.

Erfindungsgemäß bevorzugt ist außerdem der Kanal (7a) der ersten Außenfläche (6a) dem Kanal (7b) der zweiten Außenfläche (6b) gegenüber angeordnet.

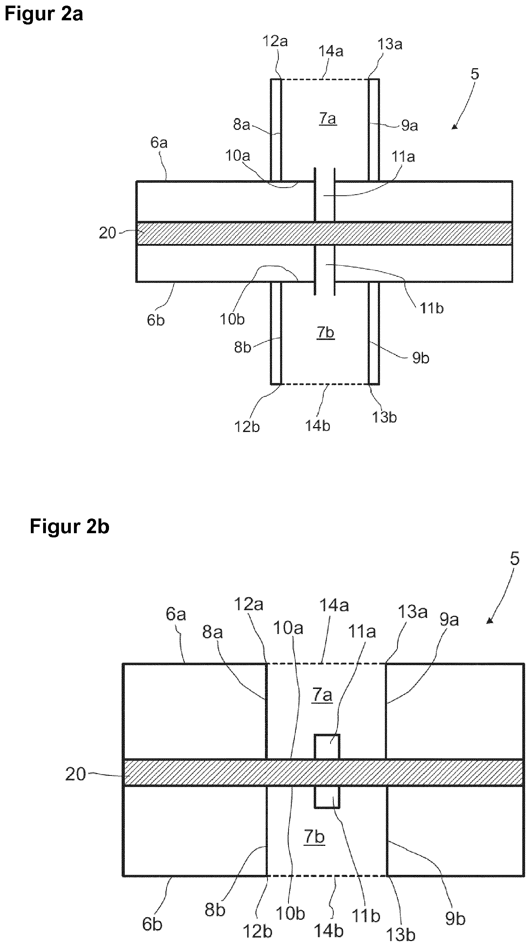

Die Figuren 2a und 2b zeigen ein beispielhaftes Werkzeug 5. In den Figuren 2a und 2b besitzen gleiche Bezugszeichen dieselbe Bedeutung. In Figur 2a ist der Kanal 7a oberhalb der ersten Außenfläche 6a angeordnet, ebenso ist der Kanal 7b oberhalb der zweiten Außenfläche 6b angeordnet. Die erste Außenfläche 6a liegt der zweiten Außenfläche 6b gegenüber, ebenso liegt der Kanal 7a dem Kanal 7b gegenüber. Die Kanäle 7a, 7b umfassen jeweils eine erste Kanalwand 8a, 8b mit einem ersten höchsten Punkt 12a, 12b und eine zweite Kanalwand 9a, 9b mit einem zweiten höchsten Punkt 13a, 13b. Die erste Kanalwand 8a, 8b und die zweite Kanalwand 9a, 9b sind jeweils auf die erste Außenfläche 6a und die zweite Außenfläche 6b aufgebracht. Die Böden 10a, 10b umfassen jeweils Mittel 11a, 11b zum Zuführen von Gas. Die Kanaleintrittsebenen sind mit den Bezugszeichen 14a und 14b gekennzeichnet.

Im Gegensatz zu Figur 2a befinden sich in Figur 2b die Kanäle 7a, 7b jeweils innerhalb der ersten Außenfläche 6a und der zweiten Außenfläche 6b.

In den Figuren 2a und 2b sind die erste Außenfläche 6a und die zweite Außenfläche 6b über ein Mittelstück 20 verbunden. Für das Mittelstück 20 gelten die zuvor beschriebenen Ausführungen und Bevorzugungen.

Die Figuren 3a bis 3d zeigen beispielhafte Kanäle 7. Gleiche Bezugszeichen in den Figuren 3a bis 3d besitzen dieselbe Bedeutung. Die in den Figuren 3a bis 3d gezeigten Kanäle können sowohl Teil der ersten Außenfläche (6a) als auch Teil der zweiten Außenfläche (6b) sein.

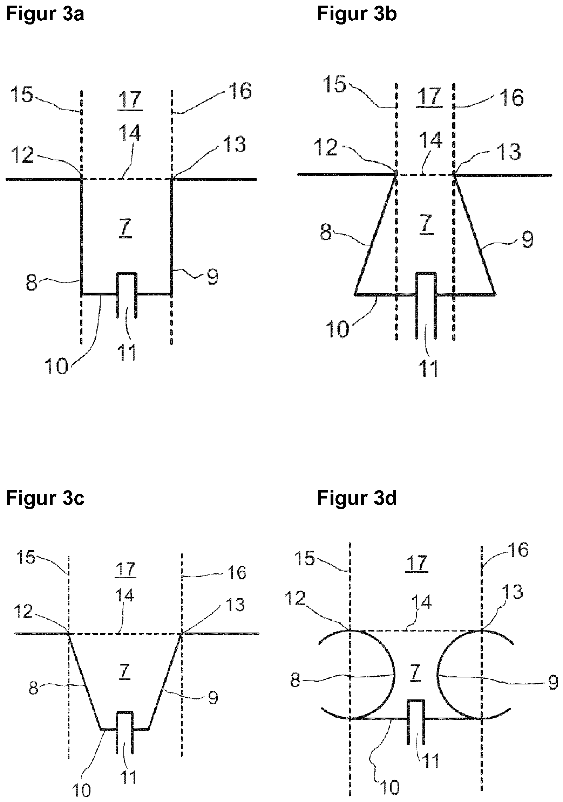

Der in Figur 3a gezeigte Kanal 7 umfasst eine erste Kanalwand 8 und eine zweite Kanalwand 9. Die erste Kanalwand 8 ist parallel zur zweiten Kanalwand 9 ausgerichtet. Der Boden 10 umfasst Mittel 11 zum Zuführen von Gas in den Kanal 7. Die erste Kanalwand 8 umfasst mehrere höchste Punkte. Der erste höchste Punkt 12 ist der höchste Punkt, der am nächsten am Kanal 7 liegt. Entsprechend umfasst auch die zweite Kanalwand 9 mehrere höchste Punkte. Der zweite höchste Punkt 13 ist der höchste Punkt, der dem Kanal 7 am nächsten ist. Die Projektionslinie 15 durch den ersten höchsten Punkt 12 senkrecht zur Kanaleintrittsebene 14 ist ebenso dargestellt wie die Projektionslinie 16 des zweiten höchsten Punkts 13 senkrecht zur Kanaleintrittsebene 14. Zwischen der Projektionslinie 15 und der Projektionslinie 16 befindet sich der äußere Kanalbereich 17. Entsprechende Ausführungen gelten für die Figuren 3b und 3c. Die Kanäle 7 der Figuren 3b und 3c unterscheiden sich von dem Kanal 7 der Figur 3a dahingehend, dass die Kanalwände 8 und 9 schräg ausgestaltet sind und daher nicht parallel zueinander und nicht senkrecht zur Ebene des Bodens 10 stehen.

Der in Figur 3d gezeigte Kanal weist konvexe Kanalwände 8, 9 auf. Die erste Kanalwand 8 weist genau einen ersten höchsten Punkt 12 auf, ebenso weist die zweite Kanalwand 9 genau einen zweiten höchsten Punkt 13 auf. Die Projektionslinie 15 des ersten höchsten Punkts 12 senkrecht zur Kanaleintrittsebene 14 ist ebenso dargestellt wie die Projektionslinie 16 des zweiten höchsten Punkts 13 senkrecht zur Kanaleintrittsebene 14. Zwischen der Projektionslinie 15 und der Projektionslinie 16 befindet sich der äußere Kanalbereich 17.

### Schritt d)

In Schritt d) wird der erste Formkörper (1a) positioniert. Das Ende (2a) weist in einer senkrecht zur Kanaleintrittsebene (14a) verlaufenden Richtung einen Abstand (Xa) zur Kanaleintrittsebene (14a) auf. Der Abstand (Xa) liegt erfindungsgemäß im Bereich von 3 mm außerhalb des Kanals (7a) bis 10 mm innerhalb des Kanals (7a). Bevorzugt liegt der Abstand (Xa) im Bereich von 0 mm bis 10 mm innerhalb des Kanals (7a) und insbesondere bevorzugt im Bereich von 0,5 mm bis 8 mm jeweils innerhalb des Kanals (7a).

Gegenstand der vorliegenden Erfindung ist daher auch ein Verfahren, bei dem der erste Formkörper (1a) in Schritt d) so positioniert wird, dass der Abstand (Xa) im Bereich von 0 bis 10 mm innerhalb des Kanals (7a) liegt.

Es versteht sich von selbst, dass der Abstand (Xa) innerhalb des Kanals (7a) immer kleiner ist als die Kanaltiefe des Kanals (7a).

Wenn der Abstand (Xa) im Bereich von > 0 mm bis 3 mm außerhalb des Kanals (7a) liegt, befindet sich das Ende (2a) zumindest teilweise im äußeren Kanalbereich (17a). Bevorzugt befindet sich das Ende (2a) dann vollständig im äußeren Kanalbereich (17a).

Gegenstand der vorliegenden Erfindung ist daher auch ein Verfahren, bei dem der erste Formkörper (1a) in Schritt d) so positioniert wird, dass, wenn der Abstand (Xa) im Bereich von > 0 mm bis 3 mm außerhalb des Kanals (7a) liegt, das Ende (2a) sich vollständig im äußeren Kanalbereich (17a) befindet.

Unter "vollständig" wird im Rahmen der vorliegenden Erfindung in diesem Zusammenhang verstanden, dass das gesamte Ende (2a) sich im äußeren Kanalbereich (17a) befindet.

Wenn der Abstand (Xa) im Bereich von 0 bis 10 mm innerhalb des Kanals (7a) liegt, weist die erste Seitenfläche (3a) erfindungsgemäß einen minimalen Abstand (Y1a) zu der ersten Kanalwand (8a) auf, der im Bereich von 0,2 bis 5 mm liegt. Die zweite Seitenfläche (4a) weist dann einen minimalen Abstand (Y2a) zu der zweiten Kanalwand (9a) auf, der im Bereich von 0,2 bis 5 mm liegt.

Bevorzugt liegt der minimale Abstand (Y1a) im Bereich von 0,5 bis 4 mm und insbesondere bevorzugt im Bereich von 1 bis 3 mm.

Der minimale Abstand (Y2a) liegt bevorzugt im Bereich von 0,5 bis 4 mm und insbesondere bevorzugt im Bereich von 1 bis 3 mm.

Der minimale Abstand (Y1a) der ersten Seitenfläche (3a) zu der ersten Kanalwand (8a) ist der kleinste Abstand zwischen der ersten Seitenfläche (3a) und der ersten Kanalwand (8a).

Entsprechendes gilt für den minimalen Abstand (Y2a). Der minimale Abstand (Y2a) der zweiten Seitenfläche (4a) zu der zweiten Kanalwand (9a) ist der kleinste Abstand zwischen der zweiten Seitenfläche (4a) und der zweiten Kanalwand (9a).

In einer bevorzugten Ausführungsform der vorliegenden Erfindung wird also der folgende Schritt d) durchgeführt:
d) Positionieren des ersten Formkörpers (1a),
wobei das Ende (2a) in einer senkrecht zur Kanaleintrittsebene (14a) verlaufenden Richtung einen Abstand (Xa) zur Kanaleintrittsebene (14a) aufweist, der im Bereich von 0 bis 10 mm innerhalb des Kanals (7a) liegt,
wobei die erste Seitenfläche (3a) einen minimalen Abstand (Y1a) zu der ersten Kanalwand (8a) aufweist, der im Bereich von 0,2 bis 5 mm, bevorzugt im Bereich von 0,5 bis 4 mm und insbesondere bevorzugt im Bereich von 1 bis 3 mm liegt, und
wobei die zweite Seitenfläche (4a) einen minimalen Abstand (Y2a) zu der zweiten Kanalwand (9a) aufweist, der im Bereich von 0,2 bis 5 mm, bevorzugt im Bereich 0,5 bis 4 mm und insbesondere bevorzugt im Bereich von 1 bis 3 mm liegt.

Gegenstand der vorliegenden Erfindung ist daher auch ein Verfahren, bei dem der folgende Schritt d) durchgeführt wird:
d) Positionieren des ersten Formkörpers (1a),
wobei das Ende (2a) in einer senkrecht zur Kanaleintrittsebene (14a) verlaufenden Richtung einen Abstand (Xa) zur Kanaleintrittsebene (14a) aufweist, der im Bereich von 0 bis 10 mm innerhalb des Kanals (7a) liegt,
wobei die erste Seitenfläche (3a) einen minimalen Abstand (Y1a) zu der ersten Kanalwand (8a) aufweist, der im Bereich von 0,2 bis 5 mm liegt, und
wobei die zweite Seitenfläche (4a) einen minimalen Abstand (Y2a) zu der zweiten Kanalwand (9a) aufweist, der im Bereich von 0,2 bis 5 mm liegt.

### Schritt e)

In Schritt e) wird der zweite Formkörper (1b) positioniert. Die Fügefläche (2b) weist in einer senkrecht zur Kanaleintrittsebene (14b) verlaufenden Richtung einen Abstand (Xb) zur Kanaleintrittsebene (14b) auf. Der Abstand (Xb) liegt erfindungsgemäß im Bereich von 3 mm außerhalb des Kanals (7b) bis 10 mm innerhalb des Kanals (7b). Bevorzugt liegt der Abstand (Xb) im Bereich von 0 mm bis 10 mm innerhalb des Kanals (7b) und insbesondere bevorzugt im Bereich von 0,5 mm bis 8 mm jeweils innerhalb des Kanals (7b).

Gegenstand der vorliegenden Erfindung ist daher auch ein Verfahren, bei dem der zweite Formkörper (1b) in Schritt e) so positioniert wird, dass der Abstand (Xb) im Bereich von 0 mm bis 10 mm innerhalb des Kanals (7b) liegt.

Wenn der Abstand (Xb) im Bereich von > 0 mm bis 3 mm außerhalb des Kanals (7b) liegt, befindet sich die Fügefläche (2b) zumindest teilweise im äußeren Kanalbereich (17b). Bevorzugt befindet sich die Fügefläche (2b) dann vollständig im äußeren Kanalbereich (17b).

Unter "vollständig" wird in diesem Zusammenhang verstanden, dass sich die gesamte Fügefläche (2b) im äußeren Kanalbereich (17b) befindet.

Gegenstand der vorliegenden Erfindung ist daher auch ein Verfahren, bei dem der zweite Formkörper (1b) in Schritt e) so positioniert wird, dass, wenn der Abstand (Xb) im Bereich von > 0 mm bis 3 mm außerhalb des Kanals (7b) liegt, die Fügefläche (2b) sich vollständig im äußeren Kanalbereich (17b) befindet.

Im erfindungsgemäßen Verfahren wird der erste Formkörper (1a) in Schritt d) so positioniert, dass, wenn der Abstand (Xa) im Bereich von > 0 mm bis 3 mm außerhalb des Kanals (7a) liegt, das Ende (2a) sich vollständig im äußeren Kanalbereich (17a) befindet, und/oder der zweite Formkörper (1b) wird in Schritt e) so positioniert, dass, wenn der Abstand (Xb) im Bereich von > 0 mm bis 3 mm außerhalb des Kanals (7b) liegt, die Fügefläche (2b) sich vollständig im äußeren Kanalbereich (17b) befindet.

Es versteht sich von selbst, dass der Abstand (Xb) innerhalb des Kanals (7b) immer kleiner ist als die Kanaltiefe des Kanals (7b).

Wenn der Abstand (Xb) im Bereich von 0 bis 10 mm innerhalb des Kanals (7b) liegt, weist der zweite Formkörper (1b) zusätzlich eine erste Seitenfläche (3b) und eine zweite Seitenfläche (4b) auf. Die erste Seitenfläche (3b) weist dann erfindungsgemäß einen minimalen Abstand (Y1b) zu der ersten Kanalwand (8b) auf, der im Bereich von 0,2 bis 5 mm liegt. Die zweite Seitenfläche (4b) weist dann einen minimalen Abstand (Y2b) zu der zweiten Kanalwand (9b) auf, der im Bereich von 0,2 bis 5 mm liegt.

Bevorzugt liegt der minimale Abstand (Y1b) im Bereich von 0,5 bis 4 mm und insbesondere bevorzugt im Bereich von 1 bis 3 mm.

Der minimale Abstand (Y2b) liegt bevorzugt im Bereich von 0,5 bis 4 mm und insbesondere bevorzugt im Bereich von 1 bis 3 mm.

Der minimale Abstand (Y1b) der ersten Seitenfläche (3b) zu der ersten Kanalwand (8b) ist der kleinste Abstand zwischen der ersten Seitenfläche (3b) und der ersten Kanalwand (8b).

Entsprechendes gilt für den minimalen Abstand (Y2b). Der minimale Abstand (Y2b) der zweiten Seitenfläche (4b) zu der zweiten Kanalwand (9b) ist der kleinste Abstand zwischen der zweiten Seitenfläche (4b) und der zweiten Kanalwand (9b).

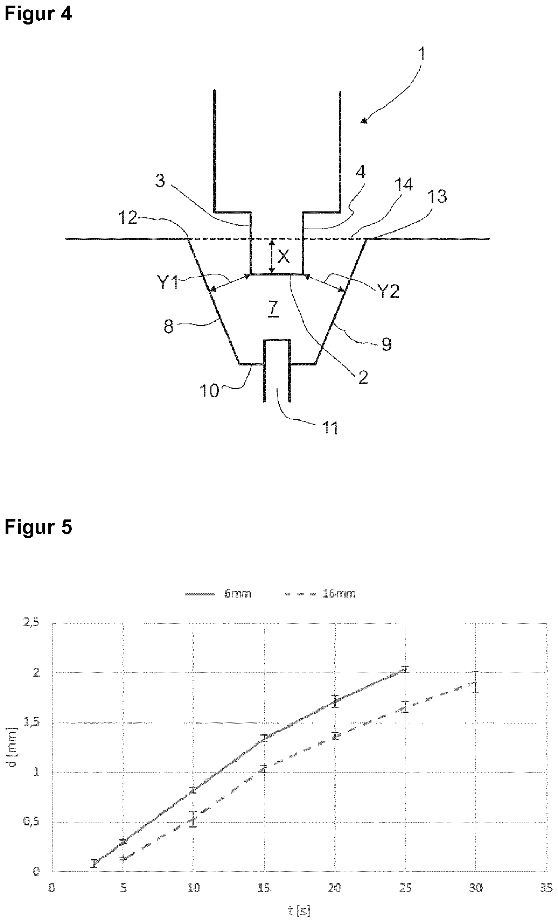

In Figur 4 sind ein beispielhafter Formkörper 1 sowie ein beispielhafter Kanal 7 gezeigt, anhand derer der Abstand X sowie die Abstände Y1 und Y2 gezeigt werden.

Der Abstand X ist der Abstand des Endes 2 des Formkörpers 1 in einer senkrecht zur Kanaleintrittsebene 14 verlaufenden Richtung zur Kanaleintrittsebene 14. Der minimale Abstand Y1 ist der kürzeste Abstand zwischen der ersten Seitenfläche 3 und der ersten Kanalwand 8. Der minimale Abstand Y2 ist der kürzeste Abstand zwischen der zweiten Seitenfläche 4 und der zweiten Kanalwand 9.

### Schritt f)

In Schritt f) wird ein heißes Gas durch das Mittel (11a) zum Zuführen von Gas in den Kanal (7a) zugeführt. Dabei erwärmt sich das Ende (2a) des ersten Formkörpers (1a) und das in dem Ende (2a) enthaltene erste thermoplastische Polymer schmilzt auf.

"Ein heißes Gas" bedeutet im Rahmen der vorliegenden Erfindung sowohl genau ein heißes Gas als auch eine Mischung aus zwei oder mehreren heißen Gasen.

Es versteht sich von selbst, dass in Schritt f) auch die Umgebung um das Ende (2a) erwärmt werden kann. Dies ist insbesondere der Fall, wenn das Ende (2a) linien- oder kantenförmig ausgestaltet ist.

In dieser Ausführungsform ist es bevorzugt, wenn der erste Formkörper (1a) das erste thermoplastische Polymer enthält und dann auch das in der Umgebung um das Ende (2a) enthaltene erste thermoplastische Polymer aufschmilzt.

Das heiße Gas kann dem Mittel (11a) zum Zuführen von Gas in den Kanal (7a) nach allen dem Fachmann bekannten Methoden zugeführt werden. Üblicherweise wird das heiße Gas durch das Mittelstück (20) dem Mittel (11a) zum Zuführen von Gas in den Kanal (7a) zugeführt.

Als heißes Gas eignen sich alle dem Fachmann bekannten Gase. Derartige Gase sind beispielsweise ausgewählt aus der Gruppe bestehend aus CO₂, N₂ und Luft.

Gegenstand der vorliegenden Erfindung ist daher auch ein Verfahren, bei dem das heiße Gas, das in Schritt f) zugeführt wird, ausgewählt ist aus der Gruppe bestehend aus CO₂, N₂ und Luft.

Unter "Luft" wird im Rahmen der vorliegenden Erfindung das Gasgemisch der Erdatmosphäre verstanden. Dieses ist dem Fachmann bekannt.

Das heiße Gas kann nach allen dem Fachmann bekannten Methoden erwärmt werden. Beispielsweise kann es durch das Mittelstück (20) erwärmt werden, ebenso ist es möglich, dass es bereits erwärmt zugeführt wird. Darüber hinaus ist es beispielsweise möglich, wenn das heiße Gas CO₂ ist, dass das heiße Gas in situ hergestellt wird durch Verbrennung von Kohlenwasserstoffen und dadurch heiß ist.

Das heiße Gas weist beispielsweise eine Temperatur im Bereich von 100 bis 600 °C auf, bevorzugt im Bereich von 250 bis 500 °C und insbesondere bevorzugt im Bereich von 300 bis 500 °C.

Gegenstand der vorliegenden Erfindung ist daher auch ein Verfahren, bei dem das heiße Gas, das in Schritt f) zugeführt wird, eine Temperatur im Bereich von 100 bis 600 °C aufweist.

Es versteht sich von selbst, dass die Temperatur des heißen Gases, das in Schritt f) zugeführt wird, sich auf die Temperatur, die das heiße Gas bei Austritt aus dem Mittel (11a) zum Zuführen eines Gases in den Kanal (7a) aufweist, bezieht, also auf die Temperatur, die das heiße Gas im Kanal (7a) aufweist.

Das Ende (2a) des ersten Formkörpers (1a) kann in Schritt f) auf eine beliebige Temperatur (T₁ₐ) erwärmt werden. Üblicherweise liegt die Temperatur (T₁ₐ) unterhalb der Zersetzungstemperatur des in dem Ende (2a) enthaltenen ersten thermoplastischen Polymers. Vorzugsweise wird das Ende (2a) des ersten Formkörpers (1a) in Schritt f) auf eine Temperatur (T₁ₐ) erwärmt, die oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist.

Gegenstand der vorliegenden Erfindung ist daher auch ein Verfahren, bei dem in Schritt f) sich das Ende (2a) des ersten Formkörpers (1a) auf eine Temperatur (T₁ₐ) erwärmt, die oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist.

Beispielsweise erwärmt sich das Ende (2a) des ersten Formkörpers (1a) auf eine Temperatur (T₁ₐ), die im Bereich von 0 bis 300 °C, bevorzugt im Bereich von 30 bis 250 °C und insbesondere bevorzugt im Bereich von 60 bis 200 °C oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die im Bereich von 0 bis 300 °C, bevorzugt im Bereich von 30 bis 250 °C und insbesondere bevorzugt im Bereich von 60 bis 200 °C oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist.

Gegenstand der vorliegenden Erfindung ist daher auch ein Verfahren, bei dem sich in Schritt f) das Ende (2a) des ersten Formkörpers (1a) auf eine Temperatur (T₁ₐ), die im Bereich von 0 bis 300 °C oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die im Bereich von 0 bis 300 °C oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, erwärmt.

Beispielsweise erwärmt sich das Ende (2a) des ersten Formkörpers (1a) auf eine Temperatur (T₁ₐ), die im Bereich von 100 bis 500 °C liegt.

Gegenstand der vorliegenden Erfindung ist daher auch ein Verfahren, bei dem in Schritt f) sich das Ende (2a) des ersten Formkörpers (1a) auf eine Temperatur (T₁ₐ) erwärmt, die im Bereich von 100 bis 500 °C liegt.

In Schritt f) schmilzt das erste thermoplastisches Polymer auf.

Im Rahmen der vorliegenden Erfindung wird unter "Aufschmelzen" im Zusammenhang mit dem ersten thermoplastischen Polymer ebenso wie im Zusammenhang mit dem zweiten thermoplastischen Polymer verstanden, dass das erste thermoplastische Polymer bzw. das zweite thermoplastische Polymer fließfähig ist.

### Schritt g)

In Schritt g) wird ein heißes Gas durch das Mittel (11b) zum Zuführen von Gas in den Kanal (7b) zugeführt. Dabei erwärmt sich die Fügefläche (2b) des zweiten Formkörpers (1b) und das in der Fügefläche (2b) enthaltene zweite thermoplastische Polymer schmilzt auf.

"Ein heißes Gas" bedeutet im Rahmen der vorliegenden Erfindung sowohl genau ein heißes Gas als auch eine Mischung aus zwei oder mehreren heißen Gasen.

Für Schritt g) gelten die zuvor beschriebenen Ausführungen und Bevorzugungen für Schritt f) entsprechend.

Gegenstand der vorliegenden Erfindung ist daher auch ein Verfahren, bei dem in Schritt g) sich die Fügefläche (2b) auf eine Temperatur (T_{1b}) erwärmt, die oberhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die oberhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist.

Gegenstand der vorliegenden Erfindung ist daher auch ein Verfahren, bei dem in Schritt f) sich das Ende (2a) des ersten Formkörpers (1a) auf eine Temperatur (T₁ₐ) erwärmt, die oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, und/oder in Schritt g) sich die Fügefläche (2b) auf eine Temperatur (T_{1b}) erwärmt, die oberhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist und die oberhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist.

Beispielsweise erwärmt sich die Fügefläche (2b) des zweiten Formkörpers (1b) auf eine Temperatur (T_{1b}), die im Bereich von 0 bis 300 °C, bevorzugt im Bereich von 30 bis 250 °C und insbesondere bevorzugt im Bereich von 60 bis 200 °C oberhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die im Bereich von 0 bis 300 °C, bevorzugt im Bereich von 30 bis 250 °C und insbesondere bevorzugt im Bereich von 60 bis 200 °C oberhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist.

Gegenstand der vorliegenden Erfindung ist daher auch ein Verfahren, bei dem in Schritt g) sich die Fügefläche (2b) des zweiten Formkörpers (1b) auf eine Temperatur (T_{1b}), die im Bereich von 0 bis 300 °C oberhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die im Bereich von 0 bis 300 °C oberhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist, erwärmt.

Gegenstand der vorliegenden Erfindung ist weiterhin ein Verfahren, bei dem in Schritt f) sich das Ende (2a) des ersten Formkörpers (1a) auf eine Temperatur (T₁ₐ) erwärmt, die im Bereich von 0 bis 300 °C oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die im Bereich von 0 bis 300 °C oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, und/oder in Schritt g) sich die Fügefläche (2b) des zweiten Formkörpers (1b) auf eine Temperatur (T_{1b}) erwärmt, die im Bereich von 0 bis 300 °C oberhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die im Bereich von 0 bis 300 °C oberhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist.

Gegenstand der vorliegenden Erfindung ist weiterhin ein Verfahren, bei dem in Schritt g) sich die Fügefläche (2b) des zweiten Formkörpers (1b) auf eine Temperatur (T_{1b}) erwärmt, die im Bereich von 100 bis 500 °C liegt.

Gegenstand der vorliegenden Erfindung ist außerdem ein Verfahren, bei dem das heiße Gas, das in Schritt g) zugeführt wird, ausgewählt ist aus der Gruppe bestehend aus CO₂, N₂ und Luft.

Gegenstand der vorliegenden Erfindung ist daher auch ein Verfahren, bei dem das heiße Gas, das in Schritt f) zugeführt wird, ausgewählt ist aus der Gruppe bestehend aus CO₂, N₂ und Luft und/oder das heiße Gas, das in Schritt g) zugeführt wird, ausgewählt ist aus der Gruppe bestehend aus CO₂, N₂ und Luft.

Gegenstand der vorliegenden Erfindung ist außerdem ein Verfahren, bei dem das heiße Gas, das in Schritt g) zugeführt wird, eine Temperatur im Bereich von 100 bis 600 °C aufweist.

Gegenstand der vorliegenden Erfindung ist weiterhin ein Verfahren, bei dem das heiße Gas, das in Schritt f) zugeführt wird, eine Temperatur im Bereich von 100 bis 600 °C aufweist und/oder das heiße Gas, das in Schritt g) zugeführt wird, eine Temperatur im Bereich von 100 bis 600 °C aufweist.

Es versteht sich von selbst, dass sich die Temperatur des heißen Gases, das in Schritt g) zugeführt wird, auf die Temperatur, die das heiße Gas bei Austritt aus dem Mittel (11b) zum Zuführen eines Gases in den Kanal (7b) aufweist, bezieht, also auf die Temperatur, die das heiße Gas im Kanal (7b) aufweist.

### Schritt h) und i)

In Schritt h) wird der erste Formkörper (1a) aus der Positionierung gemäß Schritt d) entfernt. In Schritt i) wird der zweite Formkörper (1b) aus der Positionierung gemäß Schritt e) entfernt.

Das Entfernen des ersten Formkörpers (1a) aus der Positionierung gemäß Schritt d) und des zweiten Formkörpers (1b) aus der Positionierung gemäß Schritt e) kann nach allen dem Fachmann bekannten Methoden erfolgen. Beispielsweise können der erste Formkörper (1a) und der zweite Formkörper (1b) jeweils bewegt werden und aus der Positionierung entfernt werden. Ebenso ist es möglich, dass das Werkzeug (5) entfernt wird, während der erste Formkörper (1a) und der zweite Formkörper (1b) nicht bewegt werden und so der erste Formkörper (1a) und der zweite Formkörper (1b) aus ihren Positionierungen entfernt werden. Darüber hinaus ist es möglich, dass sowohl der erste Formkörper (1a) als auch der zweite Formkörper (1b) aus der Positionierung entfernt werden, während gleichzeitig das Werkzeug (5) entfernt wird.

Diese Verfahren sind dem Fachmann als solche bekannt.

### Schritt j)

In Schritt j) wird das erwärmte Ende (2a) des ersten Formkörpers (1a) mit der erwärmten Fügefläche (2b) des zweiten Formkörpers (1b) in Kontakt gebracht. Das erwärmte Ende (2a) des ersten Formkörpers (1a) und die erwärmte Fügefläche (2b) des zweiten Formkörpers (1b) werden abgekühlt, während das erwärmte Ende (2a) und die erwärmte Fügefläche (2b) miteinander in Kontakt sind. Dabei bildet sich eine Schweißnaht zwischen dem ersten Formkörper (1a) und dem zweiten Formkörper (1b) aus. Es wird ein verschweißter Formkörper erhalten.

Unter "in Kontakt bringen" wird vorliegend verstanden, dass das erwärmte Ende (2a) des ersten Formkörpers (1a) die erwärmte Fügefläche (2b) des zweiten Formkörpers (1b) berührt.

Das in Kontakt bringen des erwärmten Endes (2a) des ersten Formkörpers (1a) mit der erwärmten Fügefläche (2b) des zweiten Formkörpers (1b) kann unter Druck erfolgen, sodass das erwärmte Ende (2a) des ersten Formkörpers (1a) und die erwärmte Fügefläche (2b) des zweiten Formkörpers (1b) gegeneinander gepresst werden. Verfahren hierzu sind dem Fachmann bekannt.

Beispielsweise liegt der Druck beim in Kontakt bringen des erwärmten Endes (2a) des ersten Formkörpers (1a) und der Fügefläche (2b) des zweiten Formkörpers (1b) im Bereich von 0,1 bis 10 MPa, bevorzugt im Bereich von 0,5 bis 6 MPa.

Das Abkühlen des erwärmten Endes (2a) des ersten Formkörpers (1a) und der erwärmten Fügefläche (2b) des zweiten Formkörpers (1b) in Schritt j) kann nach allen dem Fachmann bekannten Methoden erfolgen. Beispielsweise kann das Abkühlen an Luft erfolgen oder unter Wasser.

Bevorzugt wird in Schritt j) das erwärmte Ende (2a) des ersten Formkörpers (1a) auf eine Temperatur (T₂ₐ), die unterhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die unterhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, abgekühlt.

Gegenstand der vorliegenden Erfindung ist daher auch ein Verfahren, bei dem das erwärmte Ende (2a) des ersten Formkörpers (1a) in Schritt j) auf eine Temperatur (T₂ₐ), die unterhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die unterhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, abgekühlt wird.

Beispielsweise wird das erwärmte Ende (2a) des ersten Formkörpers (1a) in Schritt j) auf eine Temperatur (T₂ₐ) abgekühlt, die im Bereich von 20 bis 400 °C liegt.

Gegenstand der vorliegenden Erfindung ist daher auch ein Verfahren, bei dem das erwärmte Ende (2a) des ersten Formkörpers (1a) in Schritt j) auf eine Temperatur (T₂ₐ), die im Bereich von 20 bis 400 °C liegt, abgekühlt wird.

Es versteht sich von selbst, dass die Temperatur (T₂ₐ), auf die das erwärmte Ende (2a) in Schritt j) abgekühlt wird, unterhalb der Temperatur (T₁ₐ), auf die das Ende (2a) in Schritt f) erwärmt wird, liegt.

Gegenstand der vorliegenden Erfindung ist daher auch ein Verfahren, bei dem die Temperatur (T₂ₐ), auf die das erwärmte Ende (2a) in Schritt j) abgekühlt wird, unterhalb der Temperatur (T₁ₐ), auf die das Ende (2a) in Schritt f) erwärmt wird, liegt.

Bevorzugt wird in Schritt j) die erwärmte Fügefläche (2b) des zweiten Formkörpers (1b) auf eine Temperatur (T_{2b}), die unterhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die unterhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist, abgekühlt.

Gegenstand der vorliegenden Erfindung ist daher auch ein Verfahren, bei dem die erwärmte Fügefläche (2b) des zweiten Formkörpers (1b) in Schritt j) auf eine Temperatur (T_{2b}), die unterhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die unterhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist, abgekühlt wird.

Gegenstand der vorliegenden Erfindung ist daher auch ein Verfahren, bei dem das erwärmte Ende (2a) des ersten Formkörpers (1a) in Schritt j) auf eine Temperatur (T₂ₐ), die unterhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die unterhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, abgekühlt wird und/oder die Fügefläche (2b) des zweiten Formkörpers (1b) in Schritt j) auf eine Temperatur (T_{2b}), die unterhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die unterhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist, abgekühlt wird.

Die Temperatur (T_{2b}), auf die die Fügefläche (2b) des zweiten Formkörpers (1b) in Schritt j) abgekühlt wird, liegt beispielsweise im Bereich von 20 bis 400 °C.

Gegenstand der vorliegenden Erfindung ist daher auch ein Verfahren, bei dem die Fügefläche (2b) des zweiten Formkörpers (1b) in Schritt j) auf eine Temperatur (T_{2b}), die im Bereich von 20 bis 400 °C liegt, abgekühlt wird.

Es versteht sich von selbst, dass die Temperatur (T_{2b}), auf die die erwärmte Fügefläche (2b) in Schritt j) abgekühlt wird, unterhalb der Temperatur (T_{1b}), auf die die Fügefläche (2b) in Schritt g) erwärmt wird, liegt.

Gegenstand der vorliegenden Erfindung ist daher auch ein Verfahren, bei dem die Temperatur (T_{2b}), auf die die erwärmte Fügefläche (2b) in Schritt j) abgekühlt wird, unterhalb der Temperatur (T_{1b}), auf die die Fügefläche (2b) in Schritt g) erwärmt wird, liegt.

Bevorzugt wird das Ende (2a) auf die gleiche Temperatur (T₂ₐ) abgekühlt wie die Temperatur (T_{2b}) der Fügefläche (2b). Dann ist die Temperatur (T₂ₐ) gleich der Temperatur (T_{2b}).

In Schritt j) bildet sich eine Schweißnaht zwischen dem ersten Formkörper (1a) und dem zweiten Formkörper (1b) aus. Die Schweißnaht befindet sich in dem Bereich, in dem ursprünglich das Ende (2a) des ersten Formkörpers (1a) und die Fügefläche (2b) des zweiten Formkörpers (1b) waren.

Eine Schweißnaht ist dem Fachmann als solche bekannt.

Die Dicke der Schweißnaht zwischen dem ersten Formkörper (1a) und dem zweiten Formkörper (1b) liegt beispielsweise im Bereich von 20 bis 500 µm, bevorzugt im Bereich von 30 bis 400 µm und am meisten bevorzugt im Bereich von 30 bis 300 µm, bestimmt mittels Mikroskopieaufnahmen.

Gegenstand der vorliegenden Erfindung ist daher auch ein Verfahren, bei dem die in Schritt j) ausgebildete Schweißnaht zwischen dem ersten Formkörper (1a) und dem zweiten Formkörper (1b) eine Dicke im Bereich von 20 bis 500 µm aufweist.

In Schritt j) wird also ein verschweißter Formkörper erhalten. Dieser verschweißte Formkörper zeichnet sich durch eine besonders homogene Schweißnaht und gute mechanische Eigenschaften aus.

Nachfolgend wird die vorliegende Erfindung anhand von Beispielen näher erläutert ohne sie hierauf zu beschränken.

### Beispiele

Als Formkörper (1a, 1b) wurden in Beispiel B1 und Vergleichsbeispiel V2 eine PA 6 GF 30-Platte (Polyamid 6 mit 30 % Glasfaser) mit 4 mm Dicke eingesetzt.

### Beispiel B1

Es wurde ein Werkzeug (5) eingesetzt, bei dem die erste Außenfläche (6a) und die zweite Außenfläche (6b) einander gegenüber lagen und bei dem der Kanal (7a) der ersten Außenfläche (6a) dem Kanal (7b) der zweiten Außenfläche (6b) gegenüber lag. Die erste Kanalwand (8a, 8b) und die zweite Kanalwand (9a, 9b) waren jeweils senkrecht zum Boden (10a, 10b) und parallel zueinander ausgerichtet, wobei der Abstand zwischen der ersten Kanalwand (8a, 8b) und der zweiten Kanalwand (9a, 9b) jeweils bei 6 mm lag. Der Boden (10a, 10b) umfasste als Mittel (11a, 11b) zum Zuführen von Gas in den Kanal (7a, 7b) Düsen. Die Formkörper (1a, 1b) wurden in einem Abstand (X) von 3,5 mm von der Kanaleintrittsebene (14a, 14b) innerhalb des Kanals (7a, 7b) positioniert, der Abstand (Y1) der ersten Seitenfläche (3a, 3b) der Formkörper (1a, 1b) von der ersten Kanalwand (8a, 8b) und der Abstand (Y2) der zweiten Seitenfläche (4a, 4b) der Formkörper (1a, 1b) von der zweiten Kanalwand (9a, 9b) betrug jeweils 1 mm. Der Abstand des Endes (2a, 2b) der Formkörper (1a, 1b) vom höchsten Punkt des Mittels (11a, 11b) zum Zuführen von Gas (der Düsen) lag bei 5 mm.

### Vergleichsbeispiel V2

Es wurde ein Werkzeug (5) eingesetzt, bei dem die erste Außenfläche (6a) und die zweite Außenfläche (6b) einander gegenüber lagen und bei dem der Kanal (7a) der ersten Außenfläche (6a) dem Kanal (7b) der zweiten Außenfläche (6b) gegenüber lag. Die erste Kanalwand (8a, 8b) und die zweite Kanalwand (9a, 9b) waren jeweils senkrecht zum Boden (10a, 10b) und parallel zueinander ausgerichtet, wobei der Abstand zwischen der ersten Kanalwand (8a, 8b) und der zweiten Kanalwand (9a, 9b) jeweils bei 16 mm lag. Der Boden (10a, 10b) umfasste als Mittel (11a, 11b) zum Zuführen von Gas in den Kanal (7a, 7b) Düsen. Die Formkörper (1a, 1b) wurden in einem Abstand (X) von 3,5 mm von der Kanaleintrittsebene (14a, 14b) innerhalb des Kanals (7a, 7b) positioniert, der Abstand (Y1) der ersten Seitenfläche (3a, 3b) der Formkörper (1a, 1b) von der ersten Kanalwand (8a, 8b) und der Abstand (Y2) der zweiten Seitenfläche (4a, 4b) der Formkörper (1a, 1b) von der zweiten Kanalwand (9a, 9b) betrug jeweils 6 mm. Der Abstand des Endes (2a, 2b) der Formkörper (1a, 1b) vom höchsten Punkt des Mittels (11a, 11b) zum Zuführen von Gas (der Düsen) lag bei 5 mm.

Es wurde die Dicke (d) der beim Erwärmen des Endes (2a) des ersten Formkörpers (1a) gebildeten Schmelzeschicht von aufgeschmolzenem erstem thermoplastischen Polymer ermittelt. Hierzu wurden der erste Formkörper (1a) und der zweite Formkörper (1b) jeweils wie vorstehend beschrieben in den Kanal (7a) der ersten Außenfläche (6a) und den Kanal (7b) der zweiten Außenfläche (6b) positioniert. Es wurde dann nur das Ende (10a) des ersten Formkörpers (1a) erwärmt, wobei durch die Düse Stickstoff mit einem Durchfluss je Düse von 1 l/min und einer Temperatur von 430 °C in den Kanal (7a) der ersten Außenfläche (6a) zugeführt wurde. Die Zeit (t in s), für die das Gas zugeführt wurde, wird auch als Plastifizierzeit bezeichnet. Diese wurde variiert. In Abhängigkeit von der Plastifizierzeit wurde dann die Schmelzeschichtdicke (d in mm) bestimmt, indem das Ende (2a) des ersten Formkörpers (1a) mit der Fügefläche (2b) des zweiten Formkörpers (1b) in Kontakt gebracht und zusammengepresst wurde, wobei die Presskraft bei 1180 N lag. Der Weg beim Zusammenpressen des ersten und zweiten Formkörpers (1a, 1b) wurde ermittelt und wird auch als Fügeweg bezeichnet. Er entspricht der Schmelzeschichtdicke (d). Die Fügefläche (2b) des zweiten Formkörpers (1b) wurde also zur Bestimmung der Schmelzeschichtdicke (d) nicht aufgeschmolzen.

Die Ergebnisse für Beispiel B1 sind in Tabelle 1 zu sehen, für Vergleichsbeispiel V2 in Tabelle 2.

**Tabelle 1**

| t [s] | d [mm] |
|---|---|
| 3 | 0,09 |
| 5 | 0,30 |
| 10 | 0,83 |
| 15 | 1,34 |
| 20 | 1,71 |
| 25 | 2,04 |

**Tabelle 2**

| t [s] | d [mm] |
|---|---|
| 5 | 0,13 |
| 10 | 0,53 |
| 15 | 1,04 |
| 20 | 1,36 |
| 25 | 1,66 |
| 30 | 1,91 |

Die Schmelzeschichtdicke (d) in Abhängigkeit von der Plastifizierzeit (t) ist außerdem in Figur 5 dargestellt. Es ist zu erkennen, dass durch das erfindungsgemäße Verfahren schneller eine größere Dicke der Schmelzeschicht erzielt wird, das in dem Ende (2a) enthaltene erste thermoplastische Polymer bzw. das in der Fügefläche (2b) enthaltene zweite thermoplastische Polymer schmilzt mit dem erfindungsgemäßen Verfahren also schneller auf als mit Verfahren wie sie im Stand der Technik beschrieben sind. Zudem ist die Schmelzeschicht homogener.

## Patentansprüche

1. Verfahren zum Verschweißen eines ersten Formkörpers (1a) mit einem zweiten Formkörper (1b),
wobei der erste Formkörper (1a) eine erste Seitenfläche (3a), eine zweite Seitenfläche (4a) und ein Ende (2a), das ein erstes thermoplastisches Polymer enthält, umfasst, und
wobei der zweite Formkörper (1b) eine Fügefläche (2b), die ein zweites thermoplastisches Polymer enthält, umfasst,
umfassend die Schritte
a) Bereitstellen des ersten Formkörpers (1a),
b) Bereitstellen des zweiten Formkörpers (1b),
c) Bereitstellen eines Werkzeugs (5), das eine erste Außenfläche (6a) und eine zweite Außenfläche (6b) aufweist,
wobei die erste Außenfläche (6a) einen Kanal (7a) umfasst, und wobei der Kanal (7a) einen Boden (10a), eine erste Kanalwand (8a) mit einem ersten höchsten Punkt (12a) und eine zweite Kanalwand (9a) mit einem zweiten höchsten Punkt (13a) aufweist, wobei der Boden (10a) Mittel (11a) zum Zuführen von Gas in den Kanal (7a) umfasst, wobei parallel zu der ersten Außenfläche (6a) eine Kanaleintrittsebene (14a) durch den ersten höchsten Punkt (12a) verläuft und wobei zwischen der Projektionslinie (15a) des ersten höchsten Punkts (12a) längs einer senkrecht zur Kanaleintrittsebene (14a) verlaufenden Richtung und der Projektionslinie (16a) des zweiten höchsten Punkts (13a) längs einer senkrecht zur Kanaleintrittsebene (14a) verlaufenden Richtung sich der äußere Kanalbereich (17a) befindet,
wobei die zweite Außenfläche (6b) einen Kanal (7b) umfasst, und wobei der Kanal (7b) einen Boden (10b), eine erste Kanalwand (8b) mit einem ersten höchsten Punkt (12b) und eine zweite Kanalwand (9b) mit einem zweiten höchsten Punkt (13b) aufweist, wobei der Boden (10b) Mittel (11b) zum Zuführen von Gas in den Kanal (7b) umfasst, wobei parallel zu der zweiten Außenfläche (6b) eine Kanaleintrittsebene (14b) durch den ersten höchsten Punkt (12b) verläuft und wobei zwischen der Projektionslinie (15b) des ersten höchsten Punkts (12b) längs einer senkrecht zur Kanaleintrittsebene (14b) verlaufenden Richtung und der Projektionslinie (16b) des zweiten höchsten Punkts (13b) längs einer senkrecht zur Kanaleintrittsebene (14b) verlaufenden Richtung sich der äußere Kanalbereich (17b) befindet,
d) Positionieren des ersten Formkörpers (1a), wobei
das Ende (2a) in einer senkrecht zur Kanaleintrittsebene (14a) verlaufenden Richtung einen Abstand (Xa) zur Kanaleintrittsebene (14a) aufweist, der im Bereich von 3 mm außerhalb des Kanals (7a) bis 10 mm innerhalb des Kanals (7a) liegt, wobei
wenn der Abstand (Xa) im Bereich von > 0 mm bis 3 mm außerhalb des Kanals (7a) liegt, das Ende (2a) sich zumindest teilweise im äußeren Kanalbereich (17a) befindet,
und wenn der Abstand (Xa) im Bereich von 0 mm bis 10 mm innerhalb des Kanals (7a) liegt, die erste Seitenfläche (3a) einen minimalen Abstand (Y1a) zu der ersten Kanalwand (8a) aufweist, der im Bereich von 0,2 bis 5 mm liegt, und die zweite Seitenfläche (4a) einen minimalen Abstand (Y2a) zu der zweiten Kanalwand (9a) aufweist, der im Bereich von 0,2 bis 5 mm liegt,
e) Positionieren des zweiten Formkörpers (1b), wobei
die Fügefläche (2b) in einer senkrecht zur Kanaleintrittsebene (14b) verlaufenden Richtung einen Abstand (Xb) zur Kanaleintrittsebene (14b) aufweist, der im Bereich von 3 mm außerhalb des Kanals (7b) bis 10 mm innerhalb des Kanals (7b) liegt, wobei
wenn der Abstand (Xb) im Bereich von > 0 mm bis 3 mm außerhalb des Kanals (7b) liegt, die Fügefläche (2b) sich zumindest teilweise im äußeren Kanalbereich (17b) befindet,
und wenn der Abstand (Xb) im Bereich von 0 mm bis 10 mm innerhalb des Kanals (7b) liegt, der zweite Formkörper (1b) zusätzlich eine erste Seitenfläche (3b) und eine zweite Seitenfläche (4b) aufweist und die erste Seitenfläche (3b) einen minimalen Abstand (Y1b) zu der ersten Kanalwand (8b) aufweist, der im Bereich von 0,2 bis 5 mm liegt, und wobei die zweite Seitenfläche (4b) einen minimalen Abstand (Y2b) zu der zweiten Kanalwand (9b) aufweist, der im Bereich von 0,2 bis 5 mm liegt,
f) Zuführen eines heißen Gases durch das Mittel (11a) zum Zuführen von Gas in den Kanal (7a), wobei sich das Ende (2a) des ersten Formkörpers (1a) erwärmt und wobei das in dem Ende (2a) enthaltene erste thermoplastische Polymer aufschmilzt,
g) Zuführen eines heißen Gases durch das Mittel (11b) zum Zuführen von Gas in den Kanal (7b), wobei sich die Fügefläche (2b) des zweiten Formkörpers (1b) erwärmt und wobei das in der Fügefläche (2b) enthaltene zweite thermoplastische Polymer aufschmilzt,
h) Entfernen des ersten Formkörpers (1a) aus der Positionierung gemäß Schritt d),
i) Entfernen des zweiten Formkörpers (1b) aus der Positionierung gemäß Schritt e),
j) in Kontakt bringen des erwärmten Endes (2a) des ersten Formkörpers (1a) mit der erwärmten Fügefläche (2b) des zweiten Formkörpers (1b) und abkühlen des erwärmten Endes (2a) des ersten Formkörpers (1a) und der erwärmten Fügefläche (2b) des zweiten Formkörpers (1b) während das erwärmte Ende (2a) und die erwärmte Fügefläche (2b) miteinander in Kontakt sind unter Ausbildung einer Schweißnaht zwischen dem ersten Formkörper (1a) und dem zweiten Formkörper (1b),
wobei der erste Formkörper (1a) in Schritt d) so positioniert wird, dass, wenn der Abstand (Xa) im Bereich von > 0 mm bis 3 mm außerhalb des Kanals (7a) liegt, das Ende (2a) sich vollständig im äußeren Kanalbereich (17a) befindet und/oder der zweite Formkörper (1b) in Schritt e) so positioniert wird, dass, wenn der Abstand (Xb) im Bereich von > 0 mm bis 3 mm außerhalb des Kanals (7b) liegt, die Fügefläche (2b) sich vollständig im äußeren Kanalbereich (17b) befindet.

2. Verfahren gemäß Anspruch 1, **dadurch gekennzeichnet, dass** in Schritt f) sich das Ende (2a) des ersten Formkörpers (1a) auf eine Temperatur (T₁ₐ) erwärmt, die oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, und/oder in Schritt g) sich die Fügefläche (2b) auf eine Temperatur (T_{1b}) erwärmt, die oberhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist und die oberhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist.

3. Verfahren gemäß einem der Ansprüche 1 oder 2, **dadurch gekennzeichnet, dass** das in dem Ende (2a) enthaltene erste thermoplastische Polymer ausgewählt ist aus der Gruppe bestehend aus Polyamiden, Polyoxymethylenen, Polysulfon, Polyphenylsulfon und Polybutylenterephthalaten und/oder das in der Fügefläche (2b) enthaltene zweite thermoplastische Polymer ausgewählt ist aus der Gruppe bestehend aus Polyamiden, Polyoxymethylenen, Polysulfon, Polyphenylsulfon und Polybutylentherephthalaten.

4. Verfahren gemäß einem der Ansprüche 1 bis 3, **dadurch gekennzeichnet, dass** das in dem Ende (2a) enthaltene erste thermoplastische Polymer und das in der Fügefläche (2b) enthaltene zweite thermoplastische Polymer gleich sind.

5. Verfahren gemäß einem der Ansprüche 1 bis 4, **dadurch gekennzeichnet, dass** in Schritt f) sich das Ende (2a) des ersten Formkörpers (1a) auf eine Temperatur (T₁ₐ) erwärmt, die im Bereich von 0 bis 300 °C oberhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die im Bereich von 0 bis 300 °C oberhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, und/oder in Schritt g) sich die Fügefläche (2b) des zweiten Formkörpers (1b) auf eine Temperatur (T_{1b}) erwärmt, die im Bereich von 0 bis 300 °C oberhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die im Bereich von 0 bis 300 °C oberhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist.

6. Verfahren gemäß einem der Ansprüche 1 bis 5, **dadurch gekennzeichnet, dass** die erste Außenfläche (6a) des in Schritt c) bereitgestellten Werkzeugs (5) der zweiten Außenfläche (6b) des Werkzeugs (5) gegenüber liegt.

7. Verfahren gemäß einem der Ansprüche 1 bis 6, **dadurch gekennzeichnet, dass** die erste Kanalwand (8a) des Kanals (7a) der ersten Außenfläche (6a) im Wesentlichen parallel zu der zweiten Kanalwand (9a) des Kanals (7a) der ersten Außenfläche (6a) ausgerichtet ist und/oder die erste Kanalwand (8b) des Kanals (7b) der zweiten Außenfläche (6b) im Wesentlichen parallel zu der zweiten Kanalwand (9b) des Kanals (7b) der zweiten Außenfläche (6b) ausgerichtet ist.

8. Verfahren gemäß einem der Ansprüche 1 bis 7, **dadurch gekennzeichnet, dass** der erste Formkörper (1a) in Schritt d) so positioniert wird, dass der Abstand (Xa) im Bereich von 0 bis 10 mm innerhalb des Kanals (7a) liegt.

9. Verfahren gemäß einem der Ansprüche 1 bis 8, **dadurch gekennzeichnet, dass** das heiße Gas, das in Schritt f) zugeführt wird, ausgewählt ist aus der Gruppe bestehend aus CO₂, N₂ und Luft und/oder das heiße Gas, das in Schritt g) zugeführt wird, ausgewählt ist aus der Gruppe bestehend aus CO₂, N₂ und Luft.

10. Verfahren gemäß einem der Ansprüche 1 bis 9, **dadurch gekennzeichnet, dass** das heiße Gas, das in Schritt f) zugeführt wird, eine Temperatur im Bereich von 100 bis 600 °C aufweist und/oder das heiße Gas, das in Schritt g) zugeführt wird, eine Temperatur im Bereich von 100 bis 600 °C aufweist.

11. Verfahren gemäß einem der Ansprüche 1 bis 10, **dadurch gekennzeichnet, dass** das erwärmte Ende (2a) des ersten Formkörpers (1a) in Schritt j) auf eine Temperatur (T₂ₐ), die unterhalb der Glasübergangstemperatur (T_{G1}) des in dem Ende (2a) enthaltenen ersten thermoplastischen Polymers liegt, wenn das erste thermoplastische Polymer ein amorphes thermoplastisches Polymer ist, und die unterhalb der Schmelztemperatur (T_{M1}) des in dem Ende (2a) enthaltenen ersten thermoplastischen Polymers liegt, wenn das erste thermoplastische Polymer ein teilkristallines thermoplastisches Polymer ist, abgekühlt wird und/oder die Fügefläche (2b) des zweiten Formkörpers (1b) in Schritt j) auf eine Temperatur (T_{2b}), die unterhalb der Glasübergangstemperatur (T_{G2}) des in der Fügefläche (2b) enthaltenen zweiten thermoplastischen Polymers liegt, wenn das zweite thermoplastische Polymer ein amorphes thermoplastisches Polymer ist, und die unterhalb der Schmelztemperatur (T_{M2}) des in der Fügefläche (2b) enthaltenen zweiten thermoplastischen Polymers liegt, wenn das zweite thermoplastische Polymer ein teilkristallines thermoplastisches Polymer ist, abgekühlt wird.

12. Verfahren gemäß einem der Ansprüche 1 bis 11, **dadurch gekennzeichnet, dass** die in Schritt j) ausgebildete Schweißnaht zwischen dem ersten Formkörper (1a) und dem zweiten Formkörper (1b) eine Dicke im Bereich von 20 bis 500 µm aufweist.

## Claims

1. Process for the welding of a first moulding (1a) to a second moulding (1b),
where the first moulding (1a) comprises a first lateral area (3a), a second lateral area (4a) and an end (2a), which comprises a first thermoplastic polymer, and
where the second moulding (1b) comprises a junction area (2b) which comprises a second thermoplastic polymer,
comprising the steps of
a) provision of the first moulding (1a),
b) provision of the second moulding (1b),
c) provision of an implement (5) which has a first external area (6a) and a second external area (6b),
where the first external area (6a) comprises a duct (7a), and where the duct (7a) has a floor (10a), a first duct wall (8a) with a first highest point (12a) and a second duct wall (9a) with a second highest point (13a), where the floor (10a) comprises means (11a) for the introduction of gas into the duct (7a), where a duct-entry plane (14a) runs through the first highest point (12a) parallel to the first external area (6a) and where the location of the exterior duct region (17a) is between the projection line (15a) from the first highest point (12a) along a direction running perpendicularly to the duct-entry plane (14a) and the projection line (16a) from the second highest point (13a) along a direction running perpendicularly to the duct-entry plane (14a),
where the second external area (6b) comprises a duct (7b), and where the duct (7b) has a floor (10b), a first duct wall (8b) with a first highest point (12b) and a second duct wall (9b) with a second highest point (13b), where the floor (10b) comprises means (11b) for the introduction of gas into the duct (7b), where a duct-entry plane (14b) runs through the first highest point (12b) parallel to the second external area (6b) and where the location of the exterior duct region (17b) is between the projection line (15b) from the first highest point (12b) along a direction running perpendicularly to the duct-entry plane (14b) and the projection line (16b) from the second highest point (13b) along a direction running perpendicularly to the duct-entry plane (14b),
d) positioning of the first moulding (1a), where
the distance (Xa) of the end (2a) from the duct-entry plane (14a) in a direction running perpendicularly to the duct-entry plane (14a) is in the range from 3 mm outside the duct (7a) to 10 mm inside the duct (7a), where if the distance (Xa) is in the range from > 0 mm to 3 mm outside the duct (7a), the location of the end (2a) is at least to some extent in the exterior duct region (17a),
and if the distance (Xa) is in the range from 0 mm to 10 mm inside the duct (7a), the minimal distance (Y1a) of the first lateral area (3a) from the first duct wall (8a) is in the range from 0.2 to 5 mm, and the minimal distance (Y2a) of the second lateral area (4a) from the second duct wall (9a) is in the range from 0.2 to 5 mm,
e) positioning of the second moulding (1b), where
the distance (Xb) of the junction area (2b) from the duct-entry plane (14b) in a direction running perpendicularly to the duct-entry plane (14b) is in the range from 3 mm outside the duct (7b) to 10 mm inside the duct (7b), where
if the distance (Xb) is in the range from > 0 mm to 3 mm outside the duct (7b), the junction area (2b) is at least to some extent in the exterior duct region (17b),
and if the distance (Xb) is in the range from 0 mm to 10 mm inside the duct (7b), the second moulding (1b) additionally has a first lateral area (3b) and a second lateral area (4b) and the minimal distance (Y1b) of the first lateral area (3b) from the first duct wall (8b) is in the range from 0.2 to 5 mm, and where the minimal distance (Y2b) of the second lateral area (4b) from the second duct wall (9b) is in the range from 0.2 to 5 mm,
f) introduction of a hot gas via the means (11a) for the introduction of gas into the duct (7a), where the temperature of the end (2a) of the first moulding (1a) increases and where the first thermoplastic polymer comprised in the end (2a) melts,
g) introduction of a hot gas via the means (11b) for the introduction of gas into the duct (7b), where the temperature of the junction area (2b) of the second moulding (1b) increases and where the second thermoplastic polymer comprised in the junction area (2b) melts,
h) removal of the first moulding (1a) from the position achieved in step d),
i) removal of the second moulding (1b) from the position achieved in step e),
j) bringing of the heated end (2a) of the first moulding (1a) into contact with the heated junction area (2b) of the second moulding (1b) and cooling of the heated end (2a) of the first moulding (1a) and of the heated junction area (2b) of the second moulding (1b) while the heated end (2a) and the heated junction area (2b) are in contact with one another to form a weld between the first moulding (1a) and the second moulding (1b),
where the first moulding (1a) is positioned in step d) in such a way that if the distance (Xa) is in the range from > 0 mm to 3 mm outside the duct (7a), the location of the end (2a) is entirely in the exterior duct region (17a) and/or the second moulding (1b) is positioned in step e) in such a way that if the distance (Xb) is in the range from > 0 mm to 3 mm outside the duct (7b), the location of the junction area (2b) is entirely in the exterior duct region (17b).

2. Process according to Claim 1, **characterized in that** the temperature (T₁ₐ) to which the temperature of the end (2a) of the first moulding (1a) increases in step f) is above the glass transition temperature (T_{G1}) of the first thermoplastic polymer comprised in the end (2a) if the first thermoplastic polymer is an amorphous thermoplastic polymer, and is above the melting point (T_{M1}) of the first thermoplastic polymer comprised in the end (2a) if the first thermoplastic polymer is a semicrystalline thermoplastic polymer, and/or the temperature (T_{1b}) to which the temperature of the junction area (2b) increases in step g) is above the glass transition temperature (T_{G2}) of the second thermoplastic polymer comprised in the junction area (2b) if the second thermoplastic polymer is an amorphous thermoplastic polymer, and is above the melting point (T_{M2}) of the second thermoplastic polymer comprised in the junction area (2b) if the second thermoplastic polymer is a semicrystalline thermoplastic polymer.

3. Process according to either of Claims 1 and 2, **characterized in that** the first thermoplastic polymer comprised in the end (2a) is selected from the group consisting of polyamides, polyoxymethylenes, polysulfone, polyphenyl sulfone and polybutylene terephthalates, and/or the second thermoplastic polymer comprised in the junction area (2b) is selected from the group consisting of polyamides, polyoxymethylenes, polysulfone, polyphenyl sulfone and polybutylene terephthalates.

4. Process according to any of Claims 1 to 3, **characterized in that** the first thermoplastic polymer comprised in the end (2a) and the second thermoplastic polymer comprised in the junction area (2b) are identical.

5. Process according to any of Claims 1 to 4, **characterized in that** the temperature (T₁ₐ) to which the temperature of the end (2a) of the first moulding (1a) increases in step f) is in the range from 0 to 300°C above the glass transition temperature (T_{G1}) of the first thermoplastic polymer comprised in the end (2a) if the first thermoplastic polymer is an amorphous thermoplastic polymer, and is in the range from 0 to 300°C above the melting point (T_{M1}) of the first thermoplastic polymer comprised in the end (2a) if the first thermoplastic polymer is a semicrystalline thermoplastic polymer, and/or the temperature (T_{1b}) to which the temperature of the junction area (2b) of the second moulding (1b) increases in step g) is in the range from 0 to 300°C above the glass transition temperature (T_{G2}) of the second thermoplastic polymer comprised in the junction area (2b) if the second thermoplastic polymer is an amorphous thermoplastic polymer, and is in the range from 0 to 300°C above the melting point (T_{M2}) of the second thermoplastic polymer comprised in the junction area (2b) if the second thermoplastic polymer is a semicrystalline thermoplastic polymer.

6. Process according to any of Claims 1 to 5, **characterized in that** the first external area (6a) of the implement (5) provided in step c) is opposite to the second external area (6b) of the implement (5) .

7. Process according to any of Claims 1 to 6, **characterized in that** the orientation of the first duct wall (8a) of the duct (7a) of the first external area (6a) is in essence parallel to the second duct wall (9a) of the duct (7a) of the first external area (6a) and/or the orientation of the first duct wall (8b) of the duct (7b) of the second external area (6b) is in essence parallel to the second duct wall (9b) of the duct (7b) of the second external area (6b).

8. Process according to any of Claims 1 to 7, **characterized in that** the first moulding (1a) is positioned in step d) in such a way that the distance (Xa) is in the range from 0 to 10 mm inside the duct (7a).

9. Process according to any of Claims 1 to 8, **characterized in that** the hot gas which is introduced in step f) is selected from the group consisting of CO₂, N₂ and air and/or the hot gas which is introduced in step g) is selected from the group consisting of CO₂, N₂ and air.

10. Process according to any of Claims 1 to 9, **characterized in that** the temperature of the hot gas which is introduced in step f) is in the range from 100 to 600°C and/or the temperature of the hot gas which is introduced in step g) is in the range from 100 to 600°C.

11. Process according to any of Claims 1 to 10, **characterized in that** the temperature (T₂ₐ) to which the heated end (2a) of the first moulding (1a) is cooled in step j) is below the glass transition temperature (T_{G1}) of the first thermoplastic polymer comprised in the end (2a) if the first thermoplastic polymer is an amorphous thermoplastic polymer, and is below the melting point (T_{M1}) of the first thermoplastic polymer comprised in the end (2a) if the first thermoplastic polymer is a semicrystalline thermoplastic polymer, and/or the temperature (T_{2b}) to which the junction area (2b) of the second moulding (1b) is cooled in step j) is below the glass transition temperature (T_{G2}) of the second thermoplastic polymer comprised in the junction area (2b) if the second thermoplastic polymer is an amorphous thermoplastic polymer, and is below the melting point (T_{M2}) of the second thermoplastic polymer comprised in the junction area (2b) if the second thermoplastic polymer is a semicrystalline thermoplastic polymer.

12. Process according to any of Claims 1 to 11, **characterized in that** the thickness of the weld formed in step j) between the first moulding (1a) and the second moulding (1b) is in the range from 20 to 500 µm.

## Revendications

1. Procédé de soudage d'un premier objet moulé (1a) à un deuxième objet moulé (1b),
dans lequel le premier objet moulé (1a) comprend une première surface latérale (3a), une deuxième surface latérale (4a) et une extrémité (2a) qui contient un premier polymère thermoplastique, et
dans lequel le deuxième objet moulé (1b) comprend un plan de joint (2b), qui contient un deuxième polymère thermoplastique,
comprenant les étapes suivantes
a) fourniture du premier objet moulé (1a),
b) fourniture du deuxième objet moulé (1b),
c) fourniture d'un outil (5) qui présente une première surface extérieure (6a) et une deuxième surface extérieure (6b),
dans lequel la première surface extérieure (6a) comprend un canal (7a), et dans lequel le canal (7a) présente un fond (10a), une première paroi de canal (8a) ayant un premier point le plus élevé (12a) et une deuxième paroi de canal (9a) ayant un deuxième point le plus élevé (13a), le fond (10a) comprenant un moyen (11a) pour amener un gaz dans le canal (7a), un plan (14a) d'entrée dans le canal courant parallèlement à la première surface extérieure (6a) en passant par le premier point le plus élevé (12a), et la zone de canal extérieure (17a) se trouvant entre la ligne de projection (15a) du premier point le plus élevé (12a) le long d'une direction courant perpendiculairement au plan (14a) d'entrée dans le canal et la ligne de projection (16a) du deuxième point le plus élevé (13a) le long d'une direction courant perpendiculairement au plan (14a) d'entrée dans le canal,
dans lequel la deuxième surface extérieure (6b) comprend un canal (7b), et dans lequel le canal (7b) présente un fond (10b), une première paroi de canal (8b) ayant un premier point le plus élevé (12b) et une deuxième paroi de canal (9b) ayant un deuxième point le plus élevé (13b), le fond (10b) comprenant un moyen (11b) pour amener un gaz au canal (7b), un plan (14b) d'entrée dans le canal courant parallèlement à la deuxième surface extérieure (6b) en passant par le premier point le plus élevé (12b), et la zone de canal extérieure (17b) se trouvant entre la ligne de projection (15b) du premier point le plus élevé (12b) le long d'une direction courant perpendiculairement au plan (14b) d'entrée dans le canal et la ligne de projection (16b) du deuxième point le plus élevé (13b) le long d'une direction courant perpendiculairement au plan (14b) d'entrée dans le canal,
d) positionnement du premier objet moulé (1a),
l'extrémité (2a) présentant, dans une direction courant perpendiculairement au plan (14a) d'entrée dans le canal, une distance (Xa) avec le plan (14a) d'entrée dans le canal, distance qui se trouve dans la plage de 3 mm à l'extérieur du canal (7a) jusqu'à 10 mm à l'intérieur du canal (7a),
quand la distance (Xa) se trouve dans la plage de > 0 mm à 3 mm à l'extérieur du canal (7a), l'extrémité (2a) se trouve au moins partiellement dans la zone de canal extérieure (17a),
et quand la distance (Xa) se trouve dans la plage de 0 mm à 10 mm à l'intérieur du canal (7a), la première surface latérale (3a) présente une distance minimale (Y1a) avec la première paroi de canal (8a), qui se trouve dans la plage de 0,2 à 5 mm, et la deuxième surface latérale (4a) présente une distance minimale (Y2a) avec la deuxième paroi de canal (9a), qui se trouve dans la plage de 0,2 à 5 mm,
e) positionnement du deuxième objet moulé (1b),
le plan de joint (2b) présentant, dans une direction courant perpendiculairement au plan (14b) d'entrée dans le canal, une distance (Xb) avec le plan (14b) d'entrée dans le canal, qui se trouve dans la plage de 3 mm à l'extérieur du canal (7b) à 10 mm à l'intérieur du canal (7b),
quand la distance (Xb) est comprise dans la plage de > 0 mm à 3 mm à l'extérieur du canal (7b), le plan de joint (2b) se trouve au moins partiellement dans la zone de canal extérieure (17b),
et quand la distance (Xb) est comprise dans la plage de 0 mm à 10 mm à l'intérieur du canal (7b), le deuxième objet moulé (1b) présente en outre une première surface latérale (3b) et une deuxième surface latérale (4b), et la première surface latérale (3b) présente une distance minimale (Y1b) avec la première paroi de canal (8b), qui se trouve dans la plage de 0,2 à 5 mm, et la deuxième surface latérale (4b) présentant une distance minimale (Y2b) avec la deuxième paroi de canal (9b), qui se trouve dans la plage de 0,2 à 5 mm,
f) amenée d'un gaz chaud, grâce au moyen (11a) d'amenée d'un gaz dans le canal (7a), l'extrémité (2a) du premier objet moulé subissant alors un échauffement, et le premier polymère thermoplastique contenu dans l'extrémité (2a) subissant alors une fusion,
g) amenée d'un gaz chaud, grâce au moyen (11b) d'amenée d'un gaz dans le canal (7b), le plan de joint (2b) du deuxième objet moulé (1b) subissant alors un échauffement, et le deuxième polymère thermoplastique, contenu dans le plan de joint (2b), subissant une fusion,
h) écartement du premier objet moulé (1a) par rapport au positionnement selon l'étape d),
i) écartement du deuxième objet moulé (1b) à partir du positionnement selon l'étape e),
j) mise en contact de l'extrémité chauffée (2a) du premier objet moulé (1a) avec le plan de joint chauffé (2b) du deuxième objet moulé (1b) et refroidissement de l'extrémité chauffée (2a) du premier objet moulé (1a) et du plan de joint chauffé (2b) du deuxième objet moulé (1b) pendant que l'extrémité chauffée (2a) et le plan de joint chauffé (2b) entrent en contact l'un avec l'autre, avec formation d'une soudure entre le premier objet moulé (1a) et le deuxième objet moulé (1b), le premier objet moulé (1a) étant dans l'étape d) positionné de telle sorte que, quand la distance (Xa) est comprise dans la plage de > 0 mm à 3 mm à l'extérieur du canal (7a), l'extrémité (2a) se trouve entièrement dans la zone de canal extérieure (17a), et/ou le deuxième objet moulé (1b) étant dans l'étape e) positionné de façon que, quand la distance (Xb) est comprise dans la plage de > 0 mm à 3 mm à l'extérieur du canal (7b), le plan de joint (2b) se trouve entièrement dans la zone de canal extérieure (17b).

2. Procédé selon la revendication 1, **caractérisé en ce que**, dans l'étape f), l'extrémité (2a) du premier objet moulé (1a) est chauffée à une température (T₁ₐ) qui est supérieure à la température de transition vitreuse (T_{G1}) du premier polymère thermoplastique contenu dans l'extrémité (2a), quand le premier polymère thermoplastique est un polymère thermoplastique amorphe, et qui se trouve au-delà de la température de fusion (T_{M1}) du premier polymère thermoplastique contenu dans l'extrémité (2a), quand le premier polymère thermoplastique est un polymère thermoplastique partiellement cristallin, et/ou, dans l'étape g), le plan de joint (2b) est chauffé à une température (T_{1b}) qui est supérieure à la température de transition vitreuse (T_{G2}) du deuxième polymère thermoplastique contenu dans le plan de joint (2b), quand le deuxième polymère thermoplastique est un polymère thermoplastique amorphe, et qui est supérieure à la température de fusion (T_{M2}) du deuxième polymère thermoplastique contenu dans le plan de joint (2b) quand le deuxième polymère thermoplastique est un polymère thermoplastique partiellement cristallin.

3. Procédé selon l'une des revendications 1 ou 2, **caractérisé en ce que** le premier polymère thermoplastique contenu dans l'extrémité (2a) est choisi dans le groupe consistant en les polyamides, les polyoxyméthylènes, la polysulfone, la polyphénylsulfone et les poly(téréphtalates de butylène) et/ou le deuxième polymère thermoplastique contenu dans le plan de joint (2b) est choisi dans le groupe consistant en les polyamides, les polyoxyméthylènes, la polysulfone, la polyphénylsulfone et les poly(téréphtalates de butylène).

4. Procédé selon l'une des revendications 1 à 3, **caractérisé en ce que** le premier polymère thermoplastique contenu dans l'extrémité (2a) et le deuxième polymère thermoplastique contenu dans le plan de joint (2b) sont identiques.

5. Procédé selon l'une des revendications 1 à 4, **caractérisé en ce que** dans l'étape f) l'extrémité (2a) du premier objet moulé (1a) est chauffée à une température (T₁ₐ) qui est comprise dans la plage de 0 à 300 °C au-dessus de la température de transition vitreuse (T_{G1}) du premier polymère thermoplastique contenu dans l'extrémité (2a) quand le premier polymère thermoplastique est un polymère thermoplastique amorphe, et qui est comprise dans la plage de 0 à 300 °C au-dessus de la température de fusion (T_{M1}) du premier polymère thermoplastique contenu dans l'extrémité (2a) quand le premier polymère thermoplastique est un polymère thermoplastique partiellement cristallin, et/ou dans l'étape g), le plan de joint (2b) du deuxième objet moulé (1b) est chauffé à une température (T_{1b}) qui est comprise dans la plage de 0 à 300 °C au-dessus de la température de transition vitreuse (T_{G2}) du deuxième polymère thermoplastique contenu dans le plan de joint (2b) quand le deuxième polymère thermoplastique est un polymère thermoplastique amorphe, et qui est comprise dans la plage de 0 à 300 °C au-dessus de la température de fusion (T_{M2}) du deuxième polymère thermoplastique contenu dans le plan de joint (2b) quand le deuxième polymère thermoplastique est un polymère thermoplastique partiellement cristallin.

6. Procédé selon l'une des revendications 1 à 5, **caractérisé en ce que** la première surface extérieure (6a) de l'outil (5) fourni dans l'étape c) est opposée à la deuxième surface extérieure (6b) de l'outil (5).

7. Procédé selon l'une des revendications 1 à 6, **caractérisé en ce que** la première paroi de canal (8a) du canal (7a) de la première surface extérieure (6a) est orientée pour l'essentiel parallèlement à la deuxième paroi de canal (9a) du canal (7a) de la première surface extérieure (6a), et/ou la première paroi de canal (8b) du canal (7b) de la deuxième surface extérieure (6b) est pour l'essentiel dirigée parallèlement à la deuxième paroi de canal (9b) du canal (7b) de la deuxième surface extérieure (6b).

8. Procédé selon l'une des revendications 1 à 7, **caractérisé en ce que** le premier objet moulé (1a) est dans l'étape d) positionné de façon que la distance (Xa) soit comprise dans la plage de 0 à 10 mm à l'intérieur du canal (7a).

9. Procédé selon l'une des revendications 1 à 8, **caractérisé en ce que** le gaz chaud amené dans l'étape f) est choisi dans le groupe consistant en CO₂, N₂ et l'air, et/ou que le gaz chaud qui est amené dans l'étape g) est choisi dans le groupe consistant en CO₂, N₂ et l'air.

10. Procédé selon l'une des revendications 1 à 9, **caractérisé en ce que** le gaz chaud qui est amené dans l'étape f) présente une température dans la plage de 100 à 600 °C et/ou que le gaz chaud qui est amené dans l'étape g) est chauffé à une température dans la plage de 100 à 600 °C.

11. Procédé selon l'une des revendications 1 à 10, **caractérisé en ce que** l'extrémité chauffée (2a) du premier objet moulé (1a) est dans l'étape j) refroidie à une température (T₂ₐ) qui est inférieure à la température de transition vitreuse (T_{G1}) du premier polymère thermoplastique contenu dans l'extrémité (2a) quand le premier polymère thermoplastique est un polymère thermoplastique amorphe, et qui est inférieure à la température de fusion (T_{M1}) du premier polymère thermoplastique contenu dans l'extrémité (2a) quand le premier polymère thermoplastique est un polymère thermoplastique cristallin, et/ou le plan de joint (2b) du deuxième objet moulé (1b) est dans l'étape j) refroidi à une température (T_{2b}) qui est inférieure à la température de transition vitreuse (T_{G2}) du deuxième polymère thermoplastique contenu dans le plan de joint (2b), quand le deuxième polymère thermoplastique est un polymère thermoplastique amorphe, et qui est inférieure à la température de fusion (T_{M2}) du deuxième polymère thermoplastique contenu dans le plan de joint (2b) quand le deuxième polymère thermoplastique est un polymère thermoplastique partiellement cristallin.

12. Procédé selon l'une des revendications 1 à 11, **caractérisé en ce que** la soudure réalisée dans l'étape j) présente entre le premier objet moulé (1a) et le deuxième objet moulé (1b) une épaisseur dans la plage de 20 à 500 pm.
